# EUROPÄISCHE PATENTSCHRIFT

(11) **EP 4 058 168 B1**
(45) Veröffentlichungstag und Bekanntmachung des Hinweises auf die Patenterteilung: **16.10.2024**
(21) Anmeldenummer: 20816393.1
(22) Anmeldetag: 09.11.2020
(51) Int. Cl.: B01D 1/06, B01D 1/28, B01D 5/00, C02F 1/04, C12N 9/00

(54) **TRENNVORRICHTUNGEN UND TRENNVERFAHREN ZUR TRENNUNG BIOGENER, HALBSYNTHETISCHER UND/ODER SYNTHETISCHER STOFFGEMISCHE IN IHRE FESTEN, FLÜSSIGEN UND GASFÖRMIGEN ANTEILE UNTER WÄRMERÜCKGEWINNUNG**
SEPARATION DEVICES AND SEPARATION METHOD FOR SEPARATING BIOGENIC, SEMI-SYNTHETIC AND/OR SYNTHETIC MATERIAL MIXTURES INTO THE SOLID, LIQUID, AND GASEOUS COMPONENTS THEREOF WHILE RECOVERING HEAT
DISPOSITIFS DE SÉPARATION ET PROCÉDÉ DE SÉPARATION POUR SÉPARER DES MÉLANGES DE MATÉRIAUX BIOGÈNES, SEMI-SYNTHÉTIQUES ET/OU SYNTHÉTIQUES EN COMPOSANTS SOLIDES, LIQUIDES ET GAZEUX DE CEUX-CI, TOUT EN RÉCUPÉRANT LA CHALEUR

(30) Priorität: 11.11.2019 DE 102019007790
(43) Veröffentlichungstag der Anmeldung: 21.09.2022
(73) Patentinhaber: EEO Tech GmbH, 49835 Wietmarschen (DE)
(72) Erfinder: OSSEFORTH, Ewald, 49835 Wietmarschen (DE); SCHERLER, Carsten, 48268 Greven (DE)
(74) Vertreter: Manasse, Uwe
(86) Internationale Anmeldenummer: PCT/DE2020/100960
(87) Internationale Veröffentlichungsnummer: WO 2021/093918

(56) Entgegenhaltungen:
- EP-A2- 0 127 289
- US-A1- 2009 020 481
- US-A1- 2010 021 979
- US-B1- 6 883 788

## Beschreibung

### Gebiet der Erfindung

Die vorliegende Erfindung betrifft eine Trennvorrichtung zur Trennung biogener, halbsynthetischer und/oder synthetischer Stoffgemische in ihre festen, flüssigen und gasförmigen Anteile unter Wärmerückgewinnung und ein Trennverfahren zur Trennung biogener, halbsynthetischer und/oder synthetischer Stoffgemische in ihre festen, flüssigen und gasförmigen Anteile unter Wärmerückgewinnung unter Verwendung der vorstehend genannten Trennvorrichtung.

Nicht zuletzt betrifft die vorliegende Erfindung die Verwendung der Trennvorrichtung und des Trennverfahrens auf den verschiedensten technischen Gebieten.

### Stand der Technik

Jährlich fallen allein in Deutschland in den Bereichen Landwirtschaft, Privathaushalte, Klärwerke und Industrie Millionen Tonnen an biogenen, halbsynthetischen und/oder synthetischen Abfallprodukten oder Stoffgemischen, die aus einem Feststoffanteil und einem flüssigen, Gase enthaltenden Anteil bestehen, an. Beispiele für solche biogenen Abfallprodukte sind Gülle, Jauche, Fäkalien, Gärreste, Fermente, Klärschlämme, Wasser aus Nachklärbecken, Konzentrate der biologischen Reinigungsstufen und Rückstände von chemischen Wäschern, mikrobiologischen Reaktoren, gentechnologischen Anlagen, Filtern und Elektrofiltern und Rückständen aus der Abluftbehandlung und aus Klimaanlagen an. Diese enthalten unter anderem Nitrate, Nitrite, Nitrosamine, Ammoniumsalze, Ammoniak, Schwefelverbindungen, Pestizide, Medikamente und deren Rückstände und Metaboliten, Schwermetalle und radioaktive Metalle und ihre Verbindungen, Viren, Bakterien und weitere toxische Materialien.

Von Seiten des Deutschen Gesetzgebers und der Europäischen Union werden daher immer strengere Maßstäbe an die Emission dieser Schadstoffe angelegt. Hierauf müssen sich Produzenten, Abfallaufbereiter und Abfallverwender einstellen.

Jedoch bereiten die Lagerung, der Transport, die Verwendung, die Aufarbeitung und die Entsorgung dieser Stoffgemische wegen ihren Mengen, ihren unterschiedlichen komplexen Zusammensetzungen, ihrer Giftigkeit, ihren Emissionen und ihres üblen Geruchs enorme Probleme.

Besonders problematisch ist Gülle und ihre traditionelle und übliche Verwertungsweise wie die Ausbringung als Dünger auf Äckern und Grünland mit einem Güllefass, das die Gülle auf der Oberfläche verteilt oder direkt in den Boden einimpft. Wird die Gülle im Übermaß ausgebracht oder zu Jahreszeiten, in denen die Vegetation wie im Winter die enthaltenen Nährstoffe nicht aufnehmen kann, steigt die Gefahr der Nährstoffauswaschung in tiefere Bodenschichten und der Einsickerung oder Abschirmung und Erosion in Grund- und Oberflächenwasser. Ammoniumsalze, Nitrate und andere Gülle-Inhaltsstoffe können durch Eutrophierung in Gewässern beispielsweise Algenblüten verursachen und Fischsterben auslösen. Nicht zuletzt ist die Ausbringung auf der Bodenoberfläche - insbesondere beim Einsatz von Breitverteilern - mit Nährstoffverlusten verbunden, da leichtlösliche Stickstoffverbindungen und vor allem Ammoniumsalze in Form von Ammoniak verloren gehen.

Gülle kann auch Rückstände von Tierarzneimitteln, insbesondere Antibiotika, enthalten. Vor allem in der Intensivtierhaltung, in welcher Antibiotika in großem Umfang eingesetzt werden, scheiden die Tiere ein Großteil der Stoffe im Kot und Urin wieder unverändert aus. Durch die Ausbringung solcher Gülle gelangen die Arzneimittel auch in die Umwelt, wie dem Grundwasser. Für den Gemüse- und Obstbau verbietet sich die Gülledüngung grundsätzlich, da über den Tierkot gefährliche Krankheitserreger wie zum Beispiel EHEC-Bakterienstämme in die Erde gelangen können.

Als Gärreste wird der flüssige oder feste Rückstand bezeichnet, der bei der Vergärung von Biomasse in einer Biogasanlage zurückbleibt. Auch die Bezeichnungen Biogasgülle oder Gärprodukt werden verwendet. Wegen ihres hohen Gehaltes an Nährstoffen werden die Gärreste meist als landwirtschaftlicher Dünger verwendet. Bei anderen Verwertungswegen werden die Gärreste zunächst getrocknet, bevor sie auf landwirtschaftlichen Flächen ausgebracht werden. Häufig werden die Trocknungsanlagen für die Gärreste mit Wärme aus der Biogasverstromung betrieben. Da die Gärreste noch einen gewissen Anteil an schwer abbaubaren Kohlenhydraten wie Cellulose und Lignocellulose enthalten kann, können sie nach dem Trocknen auch als Brennstoff interessant sein. Indes verursachen die hohen mineralischen Anteile und die enthaltenen Schwefel- und Stickstoffverbindungen einen hohen Anfall an Schlacke und Korrosion.

Ein weiterer Problemkreis ist Klärschlamm. Dabei handelt es sich um eine Mischung aus Fest- und Flüssigstoffen, die bei der Abwasserreinigung durch Sedimentation anfallen. In dem flüssigen Medium liegen neben Wasser eine Vielzahl von chemischen Verbindungen gelöstem Zustand vor. Klärschlamm ist im Ausgangszustand dünnflüssig und dunkel gefärbt. Durch Sedimentation (Schwerkrafteinwirkung) werden Feststoffgehalte von etwa 2 % bis 5 % erzielt

Bei dem Klärschlamm unterscheidet man Rohschlamm und behandelten Klärschlamm. Schlammfelder auf Kläranlagen als Primärschlamm in der mechanischen Reinigungsstufe oder als Überschussschlamm in der biologischen Stufe. Überschussschlamm besteht überwiegend aus Mikroorganismen wie Pilzen und Bakterien. Durch aerobe und anaerobe Stabilisierung des Rohschlamms erhält man den weniger geruchsintensiven, behandelten Klärschlamm. Die anaerobe Behandlung erfolgt in größeren Kläranlagen in Faultürmen und liefert den Faulschlamm.

Durch Flockung und Fällung mit Hilfsstoffen wie Eisen(III)-chlorid oder Kalk, der Klärschlamm so aufbereitet, dass er beispielsweise durch Zentrifugen- und Siebbandanlagen auf Feststoffgehalte von bis zu 35 % entwässert werden kann. Mithilfe von Kammerfilterpressen sind auch noch höhere Entwässerungsgrade erreichbar.

Der Klärschlamm ist reich an Nährstoffen, da die Bakterien in der biologischen Stufe die Abwasserinhaltsstoffe zum Aufbau der Biomasse verwenden. Von besonderer Bedeutung sind insbesondere für die Landwirtschaft Nitrate, die bis zu 1300 mg/Liter vorhanden sind, Phosphate und andere Nährsalze.

Klärschlamm enthält aber auch Stoffe, die für Umwelt und Mensch problematisch sein können. Insbesondere sind es Schwermetalle, die unter anderem durch Rücklösungen aus Rohrleitungen in den Klärschlamm gelangen. Organische Schadstoffe sind ebenfalls ein nicht zu vernachlässigendes Problem. Im Klärschlamm kann eine Vielzahl von organischen Verbindungen mit verschiedenen Eigenschaften und Wirkungen, die durch anthropogene Prozesse in das Abwasser gelangen, vorhanden sein. Diese Stoffe können beispielsweise krebserzeugend, mutagen, toxisch oder hormonell wirksam sein. Die Klärschlammverordnung gibt Grenzwerte für die Summenparameter AOX (absorbierbare organisch gebundene Halogene), PCB (polychlorierte Biphenyle) und PCDD (polychlorierte Dioxine und Dibenzofurane) vor. Sind solche Stoffe im Abwasser vorhanden, tritt eine besondere Gefahr auf, da sie sich bereits in geringen Konzentrationen nach der landwirtschaftlichen Aufbringung durch Bioakkumulation anreichern und in die Nahrungskette gelangen können. Zwar sind durch die zwischenzeitlich erlassenen gesetzlichen Verbote zur Verwendung einiger Unkraut- und Schädlingsbekämpfungsmittel einige dieser Verbindungen in den Klärschlämmen aktuell nicht mehr nachweisbar, jedoch sind sonstige toxische organische Verbindungen noch immer in den Klärschlämmen vorhanden.

Pro Jahr werden 200.000.000 t Gülle und zusätzlich Gärreste, Trockenfermente und Konzentrate aus Abluftwäschern in Deutschland auf die Äcker verbracht. Dies entspricht 34.000.000 t/Jahr an Ammonium, 36.000.000 t/Jahr an Nitrat und 20.000.000 t/Jahr und Phosphat allein aus der Gülle.

Die Ammoniumform des Ammoniaks geht indes nicht über die Gasphase verloren, da sie nicht flüchtig ist. Ihre Mobilität ist jedoch geringer als die von Nitrat, da es sich als Kation an die negativgeladenen Bodenpartikel ionisch binden kann.

In wassergesättigten Böden und bei hohen Temperaturen wird die Denitrifikation zu Distickstoffmonoxid (Lachgas) und Stickoxiden NOx begünstigt, bei denen es sich um Treibhausgase handelt.

Man versucht daher momentan Gülle zu verbrennen und/oder zu pyrolisieren, Nitrat zu vernichten, Ammoniak durch Trocknung zu binden oder Nitrifikationshemmer einzusetzen oder Gülle unter Druck zu sterilisieren.

Die Pyrolyse und die Verbrennung der Gülle benötigen hohe Energien, weil das Wasser verdampft werden muss. Außerdem muss mit Filtern der Feinstaub zurückgehalten werden. Phosphate gehen verloren, da diese verglasen und daher nicht mehr biologisch verfügbar sind. Wichtige Stickstoffdünger gehen verloren und wandeln sich in Stickoxide NOx um, die umweltgefährdend sind und Säuren bilden. Die Trennverfahren müssen zentral durchgeführt werden, dass sie nur großtechnisch umgesetzt werden können und mit hohen Investitionen verbunden sind. Dies führt zu zusätzlichen Transportkosten und Emissionen. Der Verlust an Stickstoffdünger muss durch Kunstdünger kompensiert werden. An und für sich sind nicht die Nitrate und das Ammonium das eigentliche Problem, sondern ihre ungleiche Verteilung über das Jahr und ihre ungleiche Aufnahme durch die Pflanzen sowie die Auswaschung. Diese Probleme werden durch die Pyrolyse und die Verbrennung nicht gelöst.

Bei der Vernichtung des Nitrats mit biologischen und chemischen Trennverfahren gehen wichtige Stickstoffdünger verloren, was wieder durch Kunstdünger kompensiert werden muss. Die Trennverfahren sind sehr kostenintensiv und lösen nicht das Problem der Langzeitdüngung.

Die Bindung des Ammoniaks in Trocknern durch Wasser und Säuren und anschließendem biologischen Abbau ist ebenfalls nicht zielführend. Zwar wird das Ammoniak bei der Gülle- und Biogasresttrocknung durch Wasser und/oder Säure gebunden und kann dann mit Bakterien zu Nitraten oxidiert werden. Diese Flüssigdünger können auch während der Vegetationsperiode aufgebracht und an den Bedarf der Pflanzen angepasst werden. Nachteilig ist jedoch der enorme Energieaufwand, um 200.000.000 t Wasser zu verdampfen und wieder zu kondensieren und mit Säure zu binden. Einfache Berechnungen ergeben, dass der Energiebedarf der zwölffachen Menge an Erdgas entsprechen würde, die in Deutschland selbst produziert werden. Aus diesen Gründen wäre diese Lösung energetisch nicht sinnvoll, ganz zu schweigen von dem Kohlendioxid-Fußabdruck, der damit verbunden wäre.

Die Reduktion des Düngemittelverlusts durch Nitrifikationshemmer ist ein einfaches Trennverfahren, das dezentralisiert durchgeführt werden kann. Dabei bleiben Phosphate, Kalium und Magnesium biologisch verfügbar, wodurch ein verbesserter Ertrag gewährleistet wird und weniger Nitrat ins Grundwasser gelangt. Die eingesetzten Nitrifikationshemmer sind jedoch als wassergefährdend eingestuft und wasserlöslich, weswegen sie das Grundwasser verseuchen. Während Nitrate aus dem Grundwasser über die biologische Reinigung wieder entzogen werden können, reichern sich die Nitrifikationshemmer im Grundwasser und in der Nahrungskette an und sind daher auf Dauer gefährdend.

Bei der Filtration von Gülle mit CNF-Filtern setzen sich die Nanoporen direkt zu, sodass sie für Gülle ohne eine vorherige Mikro- und Nanofiltration nicht durchgängig sind und auch das Nitrat nicht binden können.

CNF bindet zwar in der anionischen Form Schwermetalle, jedoch müssen diese gemeinsam mit der CNF aus der Gülle entfernt werden, da sie ansonsten beim biologischen Abbau der CNF im Boden wieder frei werden.

In der nicht vorveröffentlichten deutschen Patentanmeldung mit dem Aktenzeichen 10 2018 114 366.4 mit dem Anmeldetag 15.6.2018 werden ein Trennverfahren und eine Vorrichtung beschrieben, die der Aufbereitung von biologischen Stoffen, insbesondere von Gärresten pflanzlicher und tierischer Herkunft, insbesondere aus Biogasanlagen, von Gülle oder von sonstigen organischen Abfallprodukten dienen. Diese biologischen Stoffe enthalten einen Feststoffanteil und einen flüssigen Anteil.

Die Vorrichtung umfasst:
- eine Abtrenneinrichtung zur Abtrennung von Wasser und Stickstoffverbindungen, insbesondere Ammoniak, aus einem biologischen Stoff, wobei die Abtrenneinrichtung umfasst:
- einen im Grundriss runden Behälter mit einem Behälterboden, einer Behälterwand und einem Behälterdeckel, wobei ihm Behälter mindestens zwei hohle zylindrische Überlaufwände konzentrisch zur Mittelachse des Behälters unter Bildung einer im Grundriss runden Zuführkammer und mindestens einer äußeren Ringkammer angeordnet sind, wobei die Höhe der Überlaufkanten der Überlaufwände von Überlaufkante zu Überlaufkante von innen nach außen abnimmt,
- eine im Behälter konzentrisch angeordnete, drehbare Glocke mit einer Glockenoberseite, wobei die Glocke über die Überlaufwände gestülpt ist und eine zylindrische Außenwand und gegebenenfalls mindestens eine konzentrisch angeordnete, radial innere zylindrische Ringwand, die von oben in die mindestens eine Ringkammer greift, aufweist, wobei die Unterseite(n) der Außenwand und der gegebenenfalls vorhandenen mindestens einen Ringwand der Glocke oberhalb des Behälterbodens endet/enden und die Außenwand und/oder die Glockenoberseite der Glocke eine obere Auslassöffnung und die gegebenenfalls vorhandene mindestens eine Ringwand der Glocke eine obere Auslassöffnung aufweisen, wobei der Behälter in seiner Behälterwand eine erste Behälterauslassöffnung oberhalb der Überlaufkante der radial äußeren bzw. radial äußersten Auslassöffnung in der Außenwand der Glocke und eine zweite Behälterauslassöffnung oberhalb der ersten Behälterauslassöffnung aufweist, wobei die zweite Behälterauslassöffnung mit der mindestens einen oberen Auslassöffnung in der Außenwand der Glocke in Fluidverbindung steht,

- ein Befüllrohr, das sich von oben konzentrisch zur Mittelachse des Behälters durch den Behälterdeckel und die Glockenoberseite in den Behälter hinein erstreckt, wobei die Unterseite des Befüllrohrs oberhalb des Behälterbodens endet und das Befüllrohr mit der Glocke, insbesondere fest, verbunden ist sowie im Behälterdeckel um seine Längsachse drehbar gelagert ist,
- eine Abdichtung zum Abdichten des Befüllrohrs und des Behälterdeckels,
- einen Drehantrieb zum Drehen des Befüllrohrs um seine Längsachse und
- eine Heizeinrichtung zum Erwärmen des biologischen Stoffes im Inneren des Behälters vom Inneren der hohlen Überlaufwände des Behälters insbesondere auf eine Temperatur von etwa 100 °C, insbesondere bei einem atmosphärischen Druck von etwa 1,0 bar, zur Erzeugung einer hinsichtlich des Feststoffanteils aufkonzentrierten Flüssigphase und einer Wasser und Stickstoffverbindungen, insbesondere Ammoniak, enthaltenden Gasphase im Inneren des Behälters.

Das Trennverfahren, das mit dieser Vorrichtung durchgeführt wird, umfasst die folgenden Trennverfahrensschritte:
- Bereitstellen eines im Grundriss runden Behälters der vorstehend beschriebenen Bauweise,
- Befüllen des Behälters mittels eines Befüllrohrs mit einem biologischen Stoff,
- gleichzeitiges Drehen der Glocke,
- Abtrennen von Wasser und Stickstoffverbindungen, insbesondere Ammoniak, aus dem biologischen Stoff in Form von Brüden mittels Verdampfung,
- Rückgewinnung von Wärme aus dem Brüden mittels Brüdenverdichtung und
- Abtrennen der Stickstoffverbindungen, insbesondere Ammoniak, aus dem verdichteten Brüden mittels Stripping und Separierung des Wasseranteils.

Diese Vorrichtung und das hiermit durchgeführte Trennverfahren haben gegenüber dem bisher bekannten Stand der Technik signifikante Vorteile. Es sind jedoch weitere Entwicklungen notwendig, um die Trennung der biologischen Stoffe noch effektiver zu gestalten und um noch mehr Wärmeenergie zurückzugewinnen.

In dem Lehrbuch "Thermische Trennverfahrenstechnik: Grundlagen und Methoden", von Mersmann, Kind und, Stichlmair, 2005, 10. Konzeptuelle Prozessentwicklung, Seiten 572 bis 574, "Gewinnung von reinem Ammoniak aus Abwasser", wird ein Zweidrucktrennverfahren mit zwei Rektifikationskolonnen zur Abtrennung von Ammoniak aus Abwasser beschrieben. In der ersten Kolonne wird bei einem Druck von 1,0 bar im Sumpf reines Wasser abgetrennt. Am Kopf kann wirtschaftlich nur auf eine Temperatur von etwa 45 °C abgekühlt werden, was einer Ammoniakkonzentration von etwa 20 Gew.-% entspricht. Das verflüssigte Kopfprodukt wird auf 20 bar verdichtet und in die zweite Kolonne eingeleitet, wo am Kopf flüssiges Ammoniak bei einer Temperatur von 45 °C gewonnen wird. Im Sumpf kann durch das Heizmedium nur eine produktseitige Temperatur von 180 °C erreicht werden, was einer Ammoniakkonzentration von 10 Gew.-% entspricht. Diese Ammoniaklösung wird in die erste Kolonne rezirkuliert.

Derartige Rezirkulationsströme sind aber für den Prozess ungünstig, da sie die internen Mengenströme erhöhen, was zu erhöhten Investitions- und Betriebskosten in Form von Energiekosten führt.

Mammutpumpen oder Airlift Pumps wie sie beispielsweise in dem amerikanischen Patent US 8,047,808 B2 beschrieben werden, sind seit über zweihundert Jahren bekannt. Sie werden unter anderem zur Förderung von Gülle aus stationären Gülletanks in Tankwagen verwendet (vgl. Agro-Center Fliegl, Pumpstation Mammut Gülle). Sie werden des Weiteren in Sand-Waschanlagen zum Auswaschen von Sand-Wasser-Organik-Gemischen unter Ausnutzung des Coanda-Effekts verwendet. Bei dieser Art der Förderung muss über ein Rohr Luft mit hohem Druck in das Steigrohr eingeblasen werden, die beim Aufstieg den Sand oder Schlamm mit dem Wasser mitreißt. Dieses Prinzip ist aber - wenn überhaupt - nur sehr eingeschränkt zur Trennung biogener, halbsynthetischer und/oder synthetischer Stoffgemische in ihre festen, flüssigen und gasförmigen Anteile unter Wärmerückgewinnung geeignet, da große Mengen an Luft eingeblasen werden müssen, die die Gase, die man abzutrennen wünscht, zu sehr verdünnen.

### Aufgabe der vorliegenden Erfindung

US 6 883 788 B1 offenbart eine Vorrichtung mit zwei Wärmetauschern, wobei ein Fluid mittels einer Zufuhrleitung eingespeist werden kann. Das Kondensat wird mittels einer Abfuhrleitung entfernt.

US 2009/020481 A1 offenbart eine Vorrichtung mit einem Wärmetauscher zum Vorwärmen eines Speisewassers durch Kondensat aus der Vorrichtung, wobei in Rohren das Wasser verdampft wird, wonach in dem entstehenden Dampf Tröpfchen durch Demister abgefangen werden, und dann mittels eines Kompressors verdichtet wird und danach mittels Zufuhrleitung in Räume kondensiert.

US 2010/021979 A1 offenbart ein Verfahren zum Behandeln von Abwasser von einer Vergärungsanlage, wobei Ammoniak abgetrennt wird und wobei komprimierter Dampf zum Verdampfen in einem Aufkocher genutzt wird.

EP 0 127 289 A2 offenbart einen Verdampfer mit Zentralrohr und dort herum angeordneten Wärmetauscherrohren. Des Weiteren weist der Verdampfer einen Tropfenabscheider auf. Die Brüden werden mittels Kompressor zu Energieeinsparung auch komprimiert.

Der vorliegenden Erfindung liegt somit die Aufgabe zu Grunde, Trennvorrichtungen und Trennverfahren bereitzustellen, durch die mit einem vergleichsweise geringen Energieaufwand und einer effektiven Wärmerückgewinnung Wasser und Stickstoffverbindungen, insbesondere Ammoniak, aus einem biologischen Stoff und die Stickstoffverbindungen auch noch von dem Wasser abgetrennt werden können. Darüber hinaus sollen sich die Trennvorrichtungen und Trennverfahren nicht nur für die Auftrennung biogener Stoffgemische, die Feststoffe, Wasser und Stickstoffverbindungen enthalten, eignen, sondern auch für die Reinigung und Auftrennung von halbsynthetischen Stoffgemischen, die durch die Weiterverarbeitung biogener Stoffgemische beispielsweise im Rahmen der Produktion von Lebensmitteln, Tiernahrung und Nahrungszusatzstoffen hergestellt werden, eignen. Des Weiteren sollen sich die Trennvorrichtungen und Trennverfahren auch für die Auftrennung und Reinigung von synthetischen Stoffgemischen im Rahmen der Produktion von organischen und anorganischen, niedermolekularen und hochmolekularen chemischen Verbindungen wie Lösemitteln, Gasen, Pharmazeutika, Farbstoffen, Katalysatoren oder Kunststoffen, eignen.

Nicht zuletzt sollen die bereitgestellten Trennvorrichtungen in platzsparender und erweiterbarer Modulbauweise zur Verfügung gestellt werden, sodass sie den jeweiligen Bedürfnissen optimal angepasst werden können. Darüber hinaus sollen sie sowohl stationär als auch mobil sein. Es soll des Weiteren möglich sein, mehrere an unterschiedlichen Orten befindliche Trennvorrichtungen von einer zentralen Anlage aus elektronisch zu steuern.

### Erfindungsgemäße Lösung

Demgemäß wurde korrosionsstabilen Materialien aufgebaute Gasabtrennenzylinder zur Abtrennung von gasförmigen Anteilen biogener, halbsynthetischer und/oder synthetischer Stoffgemische gemäß dem unabhängigen Anspruch 1 gefunden
die aus thermisch, mechanisch und chemisch stabilen und korrosionsstabilen Materialien aufgebaute Trennvorrichtung zur Trennung biogener, halbsynthetischer und/oder synthetischer Stoffgemische in ihre festen, flüssigen und gasförmigen Anteile unter Wärmerückgewinnung gemäß dem unabhängigen Anspruch 1gefunden. Im Folgenden wird die Trennvorrichtung der Kürze halber als »erfindungsgemäße Trennvorrichtung« bezeichnet.

Vorteilhafte Ausführungsformen der erfindungsgemäßen Trennvorrichtung sind Gegenstand der abhängigen Ansprüche 2 bis 6.

Außerdem wurde das Trennverfahren zur Trennung biogener, halbsynthetischer und/oder synthetischer Stoffgemische in ihre festen, flüssigen und gasförmigen Anteile unter Wärmerückgewinnung mithilfe der erfindungsgemäßen Vorrichtung gemäß dem unabhängigen Anspruch 7 gefunden. Im Folgenden wird das Trennverfahren der Kürze halber als »erfindungsgemäßes Trennverfahren« bezeichnet.

Vorteilhafte Ausführungsformen des erfindungsgemäßen Trennverfahrens sind Gegenstand der abhängigen Ansprüche 8 bis 13.

Außerdem wurde die Verwendung der erfindungsgemäßen Trennvorrichtung und des erfindungsgemäßen Trennverfahrens gemäß dem unabhängigen Anspruch 14 gefunden, die als »erfindungsgemäße Verwendung« bezeichnet wird.

### Vorteile der Erfindung

Im Hinblick auf den Stand der Technik war es überraschend und für den Fachmann nicht vorhersehbar, dass die Aufgabe, die der vorliegenden Erfindung zu Grunde lag, mithilfe der erfindungsgemäßen Trennvorrichtung, des erfindungsgemäßen Trennverfahrens und der erfindungsgemäßen Verwendung gelöst werden konnte.

Insbesondere überraschte, dass der Gasabtrennzylinder und der Umdampfer hervorragend zu einer besonders effektiven und effizienten erfindungsgemäßen Trennvorrichtung, mit der das erfindungsgemäße Trennverfahren besonders gut durchgeführt werden konnte, kombiniert werden konnten.

Des Weiteren überraschte, dass mit einem vergleichsweise geringen Energieaufwand und einer effektiven Wärmerückgewinnung Wasser und Stickstoffverbindungen, insbesondere Ammoniak, aus einem biologischen Stoff und die Stickstoffverbindungen auch noch von dem Wasser abgetrennt werden konnten. Darüber hinaus eigneten sich die erfindungsgemäße Trennvorrichtung und das erfindungsgemäße Trennverfahren nicht nur für die Auftrennung biogener Stoffgemische, die Feststoffe, Wasser und Stickstoffverbindungen enthielten, sondern auch für die Reinigung und Auftrennung von halbsynthetischen Stoffgemischen, die durch die Weiterverarbeitung biogener Stoffgemische beispielsweise im Rahmen der Produktion von Lebensmitteln, Tiernahrung und Nahrungszusatzstoffen hergestellt wurden, hervorragend eigneten. Des Weiteren eigneten sich die Trennvorrichtung und das Trennverfahren auch hervorragend für die Auftrennung und Reinigung von synthetischen Stoffgemischen im Rahmen der Produktion von organischen und anorganischen, niedermolekularen und hochmolekularen chemischen Verbindungen wie Lösemitteln, Treibstoffen, technischen Gasen, Pharmazeutika, Farbstoffen, Katalysatoren oder Kunststoffen.

Nicht zuletzt konnte die erfindungsgemäße Trennvorrichtung in platzsparender und erweiterbarer Modulbauweise zur Verfügung gestellt werden, sodass sie den jeweiligen Bedürfnissen optimal angepasst werden konnte. Darüber hinaus konnte sie sowohl stationär als auch mobil sein. Es war des Weiteren möglich, mehrere an unterschiedlichen Orten befindliche erfindungsgemäße Trennvorrichtungen von einer zentralen Anlage aus elektronisch zu steuern.

Weitere besondere Vorteile gehen aus der nachfolgenden Beschreibung hervor.

### Ausführliche Beschreibung der Erfindung

Der Gasabtrennzylinder und der vertikale Umdampfer werden als Komponenten in der erfindungsgemäßen Trennvorrichtung verwendet. Ihre Beschreibung erfolgt daher im Rahmen der Beschreibung der erfindungsgemäßen Trennvorrichtung und des erfindungsgemäßen Trennverfahrens.

Die erfindungsgemäße Trennvorrichtung ist aus thermisch, mechanisch und chemisch stabilen und gegen Korrosion stabilen Materialien aufgebaut. Beispiele solcher Materialien sind Metalle wie Kupfer, Kupferlegierungen, Stahl, V2A-Stahl, V4A-Stahl, Chromstahl, Chrom-Nickel-Stahl und Monel, Gläser, Saphirglas, Glaskeramiken, Keramiken und Hochleistungkunststoffe wie Teflon, KEL-F^{®}, Polyetherketone, Polysulfone, Polyimide, Polyketone, Polyethersulfone und Polyamidimide. Die Hochleistungskunststoffe können noch mit einer Kratzfestbeschichtung, die beispielsweise Siliziumdioxid-Nanopartikel enthält, ausgerüstet werden.

Die erfindungsgemäße Trennvorrichtung dient der Trennung biogener, halbsynthetischer und/oder synthetischer Stoffgemische in ihre festen, flüssigen und gasförmigen Anteile. Vorzugsweise werden die Stoffgemische und ihre Inhaltsstoffe aus
- Abfallprodukten, ausgewählt aus der Gruppe, bestehend aus Gülle, Jauche, Fäkalien, Gärresten, Fermenten, Klärschlämmen, Wasser aus Nachklärbecken, Konzentraten der biologischen Reinigungsstufen und Rückständen von chemischen Wäschern, mikrobiologischen Reaktoren, gentechnologischen Anlagen, Filtern und Elektrofiltern und Rückständen aus der Abluftbehandlung und aus Klimaanlagen,
- Aufschlämmungen und Kulturen von Mikroorganismen und Zellen sowie Aufschlämmungen von zerkleinerten Pilzen, Pflanzen, Pflanzenresten, toten Tieren und Tierresten,
- nativen Biopolymeren, ausgewählt aus der Gruppe, bestehend aus Proteinen und Peptiden, Nukleinsäuren, alpha-Polysacchariden, beta-Polysacchariden, Lipiden, Polyhydroxyalkanoaten, Cutin, Suberin, Polylactiden, Polyhydroxybutyraten, thermoplastische Stärken, Thermoplasten auf Ligninbasis und Epoxyacrylaten auf der Basis von natürlichen Ölen,
- Wachsen, ausgewählt aus der Gruppe, bestehend aus Candelillawachs, Carnaubawachs, Japanwachs, Espartograswachs, Korkwachs, Guarumawachs, Reiskeimölwachs, Zuckerrohrwachs, Ouricurywachs, Montanwachs, absolute Blütenwachsen, Kuba-Palmenwachs, Baumwollwachs, Flachswachs, Torfwachs, Rosenwachs, Jasminwachs, Peethawachs, Myrtewachs, Wachsfeigenwachs, Walrat, Wollwachs, Schellack, Chinawachs, Bienenwachs, Bürzeldrüsenwachs, Ceresin, Ozokerit, Hartwachsen, Montanesterwachsen, Sasolwachsen, hydrierten Jojobawachsen, Wollwachsalkoholen (Eucerit) und modifizierte Bienenwachsen (Cerabellina).
- Körperflüssigkeiten, ausgewählt aus der Gruppe, bestehend aus Blut, Lymphe, Speicher, Magensaft, Sekretion des Pankreas, Galle, Urin, Schweiß, Muttermilch, Vaginalsekret, Tränenflüssigkeit, Nasensekret, Ejakulat, Menstruationsflüssigkeit, Surfactant, Wasser des Auges, Hirnwasser, Aszites, Pleuraflüssigkeit, Pericardflüssigkeit, Gelenksflüssigkeit, Fruchtwasser und Ohrenschmalz,
- Feststoff-Flüssigkeit-Gas-Gemischen aus Erdölquellen, Erdgasquellen, Erzbergwerken, Kohlebergwerken und chemischen Reaktoren, insbesondere Kohlendioxid, Methan, Propan, Ammoniak, flüchtige organische Amine, Wasserstoff enthaltende Lösungen und Dispersionen, die Reaktionsprodukte wie niedermolekulare organische Verbindungen, Oligomere und Polymere und/oder von heterogene Katalysatoren wie Zeolithe und geträgerte Edelmetalle, enthalten,
- anorganischen und organischen, niedermolekularen, oligomeren und hochmolekularen Feststoffen, insbesondere Sanden, Erzen, Oxiden, Katalysatoren, niedermolekularen organischen Verbindungen, Oligomeren und Polymeren,
- anorganischen und organischen, bevorzugt protisch polaren und aprotisch unpolaren und polaren, Lösemitteln, insbesondere Wasser, flüssiges Ammoniak, Methanol, Ethanol, Propanol, Isopropanol, Butanol, Amylalkohol, Ethylenglykol, Trimethylenglykol, Butylenglykol, Ethylenglykoldimethylether, Butylenglykoldimethylether, Dimethylether, Diethylether, Aceton, Methylethylketon, N-Methylpyrrolidon, Dimethylsulfat, Pentan, Heptan, Octan und Nonan und ihre Isomere, Cyclohexan, Cyclohexanon, Toluol, Kresol sowie perhalogenierte und teilhalogenierte chlorierte, fluorierte und chlorfluorierte Kohlenwasserstoffe wie Chloroform, Tetrachlorkohlenstoff, Trichlorethan, Frigene und partiell fluorierte Kohlenwasserstoffe; weitere Lösemitteln gehen aus dem Lehrbuch von Dieter Stoye und Werner Freitag (Editoren), Paints, Coatings and Solvents, 2. Aufl., Wiley-VCH, 1998, Seiten 327 bis 399, hervor.
- anorganischen und organischen Gasen, insbesondere die vorstehend aufgeführten, und
- Lebensmitteln, Getränken und Lebensmittelvorprodukten, insbesondere pastösen und cremigen Lebensmitteln und Teigen, Fruchtsäften, Bieren, Weinen, Gemüsesäften, passierten Gemüsen wie passierten Tomaten, Zuckersirup, Zuckerlösungen und Melasse,
ausgewählt.

Die erfindungsgemäße Trennvorrichtung umfasst - in der Reihenfolge des Ablaufs der Trennverfahrensschritte des erfindungsgemäßen Trennverfahrens gesehen - zumindest die folgenden Komponenten:
(A) mindestens eine, insbesondere eine, erste Förderervorrichtung, vorzugsweise eine Förderpumpe, zum Fördern mindestens eines Stroms mindestens eines, insbesondere eines, ersten Stoffgemischs der vorstehend beschriebenen Art durch mindestens einen, insbesondere einen, Eingangswärmetauscher zum Aufheizen des mindestens einen, insbesondere einen, ersten Stroms zur Bildung mindestens eines, insbesondere eines, heißen Stroms eines zweiten Stoffgemischs durch mindestens ein, insbesondere ein, heißes Kondensat des Brüden aus dem nachstehend beschriebenen mindestens einen, insbesondere einen, Umdampfer, wobei der mindestens eine, insbesondere eine, Eingangswärmetauscher mindestens einen, insbesondere einen, Ablauf für das mindestens eine, insbesondere eine, abgekühlte Kondensat des Brüden und mindestens einen, insbesondere einen, Auslass für die Dämpfe des Kondensats des Brüden aufweist,
(B) mindestens eine, insbesondere eine, Leitung, bevorzugt mindestens eine, insbesondere eine, Rohrleitung, zur Förderung des mindestens einen, insbesondere einen, heißen zweiten Stroms von dem mindestens einen, insbesondere dem einen, Eingangswärmetauscher in mindestens einen, insbesondere einen, Fliehkraftabscheider, bevorzugt in mindestens einen, insbesondere in einen, Hydrozyklon, mittels mindestens einer, insbesondere einer, mit einem heißen Medium, insbesondere mit Heißdampf, betriebenen mindestens einen, insbesondere einen, zweiten Fördervorrichtung, vorzugsweise mindestens einen, insbesondere einen, Ejektor, Turboverdichter, Seitenkanalverdichter und/oder Kompressor, zum Aufschäumen des flüssigen und gasförmigen Anteils des mindestens einen, insbesondere einen, heißen zweiten Stroms durch die Änderung der Oberflächenspannung beim Eintritt und im Inneren des mindestens einen, insbesondere einen, Fliehkraftabscheiders, bevorzugt des mindestens einen, insbesondere des einen, Hydrozyklons, zur Erzeugung eines Dichteunterschieds zwischen dem flüssigen Anteil und dem festen Anteil des mindestens einen, insbesondere einen, heißen zweiten Stoffgemischs, sodass die Dichte des festen Anteils > die Dichte des flüssigen und gasförmigen Anteils ist,
(C) mindestens eine, insbesondere eine, Vorrichtung, vorzugsweise mindestens eine, insbesondere eine, Schleuse, zum Austragen des in dem mindestens einen, insbesondere einen, Fliehkraftabscheider, vorzugsweise des mindestens einen, insbesondere des einen, Hydrozyklons, abgetrennten Feststoffanteils,
(D) mindestens eine, insbesondere eine, Leitung, vorzugsweise mindestens eine, insbesondere eine, Rohrleitung, zur Förderung des abgetrennten, aufgeschäumten, flüssigen und gasförmigen Anteils in den mindestens einen, insbesondere den einen, Flüssigkeitsauffangbehälter mindestens eines, insbesondere eines, Gasabtrennenzylinders mit kreisförmigem Querschnitt, wobei der mindestens eine, insbesondere eine, Gasabtrennenzylinder zumindest die folgenden Komponenten umfasst:
   (d1) mindestens einen, insbesondere einen, oberhalb des mindestens einen, insbesondere einen, Flüssigkeitsauffangbehälters fluchtend zu dem mindestens einen, insbesondere einen, Gasabtrennenzylinder angeordneten mindestens einen, insbesondere einen, ersten Wärmetauscher mit einer Betriebstemperatur T1 zum Auskondensieren und zur Rückführung von kondensiertem flüssigem Anteil, in dem eine geringe Menge von gasförmigem Anteil gelöst ist, in den mindestens einen, insbesondere einen, Flüssigkeitsauffangbehälter,
   (d2) mindestens einer, insbesondere einer, oberhalb des mindestens einen, insbesondere des einen, ersten Wärmetauschers fluchtend angeordneten Wendekammer zur Umlenkung des verbleibenden gasförmigen Anteils mit geringen Mengen an verbleibendem flüssigem Anteil zum Eintritt in den mindestens einen, insbesondere den einen, zweiten, fluchtend angeordneten Wärmetauscher einer Betriebstemperatur T2 < T1 zum Auskondensieren mindestens einer Lösung des gasförmigen Anteils in dem flüssigen Anteil und zum Sammeln dieser Lösung in mindestens einer, insbesondere einer, unterhalb des mindestens einen, insbesondere des einen, zweiten Wärmetauschers angeordneten Sammelkammer zur Verhinderung des Rücklaufs der besagten Lösung und zur Ausleitung der besagten Lösung durch mindestens eine, insbesondere eine, Auslaufvorrichtung sowie
   (d3) mindestens einen, insbesondere einen, am oberen Ende des mindestens einen, insbesondere des einen, erfindungsgemäßen Gasabtrennenzylinders angeordneten mindestens einen, insbesondere einen, Abgasauslass zur Ableitung der nicht kondensierten restlichen Gase,
(E) mindestens eine, insbesondere eine, Leitung, vorzugsweise mindestens eine, insbesondere eine, Rohrleitung, zum Befördern des mindestens einen, insbesondere des einen, in dem mindestens einen Flüssigkeitsauffangbehälter befindlichen vereinigten Stoffgemischs in mindestens einen, insbesondere in einen, am unteren Ende mindestens eines, insbesondere eines Umdampfers mit kreisförmigem Querschnitt angeordneten Verteilerraum, wobei der mindestens eine, insbesondere der eine, Umdampfer des Weiteren zumindest die folgenden Komponenten umfasst:
   (e1) mindestens eine, insbesondere eine, Vorrichtung zur Dosierung mindestens eines, insbesondere eines Mittels, vorzugsweise einer anorganischen und/oder organische Säure, bevorzugt Schwefelsäure und/oder ortho-Phosphorsäure, in den mindestens einen, insbesondere einen, Verteilerraum zur Bindung der verbliebenen gasförmigen Anteile, insbesondere des Ammoniaks und/oder der flüchtigen organischen Amine, des vereinigten Stoffgemischs und zur Bildung eines von gasförmigen Anteilen, insbesondere von Ammoniak und/oder von flüchtigen organischen Aminen, befreiten Stoffgemischs,
   (e2) mindestens einen, insbesondere einen, Rohrbündelwärmetauscher mit konzentrisch angeordneten Wärmetauscherrohren zum Erhitzen des aus dem mindestens einen, insbesondere einen, Verteilerraum vertikal nach oben strömenden Stoffgemischs, wobei der mindestens eine, insbesondere eine, Rohrbündelwärmetauscher mit über mindestens ein, insbesondere ein, Brüdenzentralrohr zurückgeleitetem heißem Brüden betreibbar ist,
   (e3) mindestens ein, insbesondere ein, das mindestens eine, insbesondere das eine, Brüdenzentralrohr jeweils konzentrisch umgebendes Brüdenrohr zur Ausleitung des Brüden aus dem mindestens einen, insbesondere dem einen, Umdampfer durch mindestens einen, insbesondere einen, Brüdenauslass zu dem mindestens einen, insbesondere dem einen, Eingangswärmetauscher zum Erwärmen des mindestens einen, insbesondere einen, ersten Stoffgemischs,
   (e4) Austrittsöffnungen am oberen Ende des mindestens einen, insbesondere des einen, Rohrbündelwärmetauschers zum Ausleiten des erhitzten flüssigen Stoffgemischs in mindestens einen, insbesondere in einen, Verdampferraum mindestens eines, insbesondere eines, den mindestens einen, insbesondere einen, Rohrbündelwärmetauscher konzentrisch umhüllenden Außenbehälter zur Abtrennung des Brüden und Sammeln des resultierenden flüssigen Stoffgemischs in mindestens einem, insbesondere in einem Sammelraum,
   (e5) mindestens ein, insbesondere ein, oberhalb der Austrittsöffnungen und des mindestens einen, insbesondere einen, Verdampferraums angeordnetes Tropfenabprallblech in der Form einer sich nach unten öffnenden Mantelfläche eines flachen Kegelstumpfs,
   (e6) mindestens einen, insbesondere einen, Brüdenaustrittsstutzen, der jeweils um das mindestens eine, insbesondere das eine, Brüdenrohr (36b) ringförmig angeordnet ist, zum Ausleiten des Brüden aus dem mindestens einen, insbesondere aus dem einen, Verdampferraum in den mindestens einen, insbesondere in den einen, unteren Abscheidering mindestens eines, insbesondere eines, als Zentrifugalabscheider wirkenden Tropfenabscheiders, wobei der mindestens eine, insbesondere der eine, untere Abscheidering des Weiteren - von innen nach außen gesehen - zumindest mindestens eine, insbesondere eine, umlaufende innere Kammer, mindestens einen, insbesondere einen, vertikal angeordneten umlaufenden Siebring zum Auffangen noch vorhandener Tropfen und Feststoffteilchen und zum Durchtritt des Brüden in und durch mindestens eine, insbesondere eine, umlaufende äußere Kammer und durch mindestens einen, insbesondere einen, umlaufenden Siebring in mindestens eine, insbesondere eine, innere Kammer mindestens eines, insbesondere eines oberen Abscheiderings umfasst, wobei mindestens eine, insbesondere eine obere Abscheidering (47) zumindest mindestens einen, insbesondere einen, Brüdenauslass für die Zuleitung zumindest eines Teils des gereinigten Brüden zu (i) mindestens einem, insbesondere einem, Brüdenverdichter zum Verdichten des gereinigten Brüden und zur Verdichtung und zur Rückführung des gereinigten Brüden in die mindestens eine, insbesondere in die eine, saubere Primärseite des mindestens einen, insbesondere einen Umdampfers als Antriebsenergie oder zur (ii) der mindestens einen, insbesondere der einen, sauberen Primärseite mindestens eines weiteren, insbesondere eines weiteren, in Kaskade geschalteten Umdampfers gleicher oder unterschiedlicher Bauart umfasst, sowie
   (e7) mindestens einen, insbesondere einen, Auslass für das Stoffgemisch am unteren Ende des mindestens einen, insbesondere des einen, Sammelraums und mindestens eine, insbesondere eine, Fördervorrichtung, vorzugsweise mindestens eine, insbesondere eine, Förderpumpe, zur Förderung des Stoffgemischs in mindestens einen, insbesondere einen, Fliehkraftabscheider, vorzugsweise mindestens einen, insbesondere einen, Hydrozyklon, zur Auftrennung und Ausleitung des flüssigen Anteils, insbesondere als flüssiger Dünger, und des restlichen festen Anteils.

Beispiele geeigneter Wärmetauscher sind Gegenstromwärmetauscher, Gleichstromwärmetauscher, Kreuzstromwärmetauscher, Wirbelstromwärmetauscher, Kreuzgegenstromwärmetauscher, Rohrbündelwärmetauscher, Rekuperatoren, Plattenwärmeüberträger, Spiralwärmeüberträger, U-Rohr-Wärmetauscher, Wärmerohre, Mantelrohrwärmeüberträger, Heizregister und Rotationswärmetauscher.

In einer weiteren Ausführungsform der erfindungsgemäßen Trennvorrichtung wird der mindestens eine, insbesondere eine, Umdampfer als Naturumlaufverdampfer betrieben.

In einer bevorzugten Ausführungsform der erfindungsgemäßen Trennvorrichtung ist an der oberen kreisförmigen Kante des mindestens einen, insbesondere einen, Rohrbündelwärmetauschers des mindestens einen, insbesondere einen, Umdampfers jeweils ein umlaufendes, sich schräg nach unten öffnendes Abtropfblech angebracht.

In noch einer weiteren bevorzugten Ausführungsform der mindestens einen, insbesondere einen, erfindungsgemäßen Trennvorrichtung hat oder haben das mindestens eine, insbesondere eine, Tropfenabprallblech, das mindestens eine, insbesondere eine, Abtropfblech und/oder der Bereich der Austrittsöffnungen des mindestens einen, insbesondere des einen, Rohrbündelwärmetauschers eine superhydrophile und/oder superhydrophobe Oberfläche.

Beispiele für superhydrophobe Oberflächen sind Oberflächen, die mit Manganoxid/Polystyrol-Nanocompositen, Zinkoxid/Polystyrol-Nanocompositen, gefälltem Calciumcarbonat, Kohlenstoffnanoröhrchen, Siliziumdioxidnanoteilchen, fluorierten Silanen oder Fluorpolymeren enthaltenden Coatings beschichtet sind.

Beispiele für superhydrophile Oberflächen sind Oberflächen, die mit Sonnenlicht bestrahltem Titandioxid beschichtet sind.

In noch einer weiteren bevorzugten Ausführungsform der erfindungsgemäßen Trennvorrichtung weist bei der Kaskadenschaltung der mindestens eine, insbesondere eine, erste Umdampfer auf seiner mindestens einen, insbesondere einen, Primärseite mindestens einen, insbesondere einen, Brüdeneingang für die Zuleitung eines heißen Mediums, insbesondere Heißdampf, einer Temperatur T3 und mindestens einen, insbesondere einen Brüdenaustritt mit einer Zuführung für das austretende heiße Medium einer Temperatur T4 zu mindestens einem, insbesondere einem, Brüdeneingang mindestens eines, insbesondere eines, zweiten Umdampfers auf. Dieser hat wiederum mindestens einen, insbesondere einen, Brüdenaustritt mit mindestens einer, insbesondere einer, Zuführung für das austretende heiße Medium, insbesondere Heißdampf, einer Temperatur T5 zu dem mindestens einen, insbesondere dem einen, Brüdeneingang mindestens eines, insbesondere eines, n-ten Umdampfers mit mindestens einem, insbesondere einem, Brüdenaustritt mit mindestens einer, insbesondere einer, Zuführung für das austretende heiße Medium einer Temperatur Tn zu mindestens einem, insbesondere einem, Wärmetauscher eines Endverbrauchers der Energie, insbesondere der Wärmeenergie. Der besagte mindestens eine, insbesondere eine, Wärmetauscher des Endverbrauchers hat mindestens einen, insbesondere einen, Kondensatauslass zu mindestens einer, insbesondere eine Sammelleitung, insbesondere für Wasser. Dabei ist Variable n gleich einer ganzen Zahl ≥3. Für die Temperaturen gilt T3 > T4 > T5 > Tn. Die in Kaskade geschalteten Umdampfer sind bevorzugt baugleich. Bevorzugt haben sie jeweils mindestens einen unteren und mindestens einen oberen Abscheidering. Vorzugsweise handelt es sich bei dem heißen Medium um heiße Dämpfe, die unter einem Druck von 1,0 bar bis 20 bar stehen können. Die Temperaturen der heißen Dämpfe liegen vorzugsweise bei 50 °C bis 500 °C. Vorzugsweise wird auch die Kondensationswärme der heißen Medien in der erfindungsgemäßen Trennvorrichtung genutzt.

Die heißen Medien können in unterschiedlicher Weise erzeugt werden. Beispielsweise können dazu heiße Abgase aus BHKW, Heizkraftwerken, Atomkraftwerken, Drehrohröfen, Gasbrennern und Gas-und Dampf-Kombikraftwerken verwendet werden. Es ist auch möglich, die heißen Medien durch Solarthermie zu erzeugen.

Bei dem Endverbraucher oder den Endverbrauchern kann es sich um stromerzeugende Turbinen handeln, deren elektrische Energie zum Betreiben der Gasabtrennenzylinder, der Umdampfer und der erfindungsgemäßen Trennvorrichtungen genutzt werden kann. Es kann sich aber auch um Warmwasserbereitungsanlagen und/oder Heizungsanlagen handeln.

Die erfindungsgemäße Trennvorrichtung weist eine Peripherie zur elektronischen, pneumatischen, hydraulischen und mechanischen Steuerung mit üblichen und bekannten Mess- und Regelgeräten und Sensoren für Druck, Temperatur, Durchfluss und chemische Zusammensetzung sowie entsprechende Aktuatoren auf.

Die erfindungsgemäße Trennvorrichtung dient der Durchführung des erfindungsgemäßen Trennverfahrens.

Das erfindungsgemäße Trennverfahren umfasst zumindest die folgenden Trennverfahrensschritte:
(A) Fördern mindestens eines, insbesondere eines, Stroms mindestens eines, insbesondere eines, ersten Stoffgemischs, bevorzugt eines ersten Stoffgemischs der vorstehend beschriebenen Art, mit mindestens einer, insbesondere einer, Fördervorrichtung, vorzugsweise einer Förderpumpe, durch mindestens einen, insbesondere einen, Eingangswärmetauscher, Aufheizen des mindestens einen, insbesondere einen, Stroms und Bilden mindestens eines, insbesondere eines, heißen Stroms eines zweiten Stoffgemischs durch mindestens ein, insbesondere ein, heißes Kondensat des Brüden aus dem mindestens einen, insbesondere einen, Umdampfer, wobei der mindestens eine, insbesondere eine, Eingangswärmetauscher mindestens einen, insbesondere einen, Ablauf für das mindestens eine, insbesondere eine, abgekühlte Kondensat des Brüden und mindestens einen Auslass für Dämpfe des Kondensats des Brüden aufweist,
(B) Fördern des mindestens einen, insbesondere einen, heißen zweiten Stroms von dem mindestens einen, insbesondere einen, ersten Wärmetauscher in mindestens einen, insbesondere in einen, Fliehkraftabscheider, bevorzugt mindestens einen, insbesondere einen, Hydrozyklon, über mindestens eine, insbesondere eine, Leitung, bevorzugt mindestens eine, insbesondere eine Rohrleitung, mittels mindestens einer, insbesondere einer, mit einem heißen Medium, insbesondere mit Heißdampf, betriebenen Fördervorrichtung, vorzugsweise mindestens einem, insbesondere einem, Ejektor und Aufschäumen des flüssigen und gasförmigen Anteils des mindestens einen, insbesondere einen, heißen zweiten Stroms durch die gezielte Änderung der Oberflächenspannung beim Eintritt und im Inneren mindestens eines, insbesondere eines, Fliehkraftabscheiders, bevorzugt mindestens eines, insbesondere eines Hydrozyklons, und Erzeugen eines Dichteunterschieds zwischen dem flüssigen und gasförmigen Anteil einerseits und dem festen Anteil andererseits des mindestens einen heißen Stoffgemischs, sodass die Dichte des festen Anteils > die Dichte des flüssigen und gasförmigen Anteils wird,
(C) Austragen des in dem mindestens einen, insbesondere in dem einen, Fliehkraftabscheider, bevorzugt in dem mindestens einen, insbesondere in dem einen Hydrozyklon, abgetrennten Feststoffanteils mit mindestens einer, insbesondere einer, Vorrichtung zum Ausschleusen von Feststoffen, bevorzugt mindestens einer, insbesondere einer, Schleuse,
(D) Förderung des abgetrennten, aufgeschäumten, flüssigen und gasförmigen Anteils durch mindestens eine, insbesondere eine, Leitung, bevorzugt mindestens eine, insbesondere eine, Rohrleitung, in den mindestens einen, insbesondere den einen, Flüssigkeitsauffangbehälter mindestens eines, insbesondere eines, Gasabtrennenzylinders mit kreisförmigem Querschnitt, wobei das erfindungsgemäße Trennverfahren in dem mindestens einen Gasabtrennenzylinder die folgenden Trennverfahrensschritte umfasst:
   (d1) Auskondensieren des flüssigen Anteils, in dem noch eine geringe Menge von gasförmigem Anteil gelöst ist, in mindestens einem, insbesondere in einem, oberhalb des mindestens einen, insbesondere einen, Flüssigkeitsauffangbehälters fluchtend zu dem mindestens einen, insbesondere dem einen, Gasabtrennenzylinder angeordneten ersten Wärmetauscher mit einer Betriebstemperatur T1 zum Auskondensieren und zur Rückführung von kondensiertem flüssigem Anteil, in dem eine geringe Menge von gasförmigem Anteil gelöst ist, in den in den mindestens einen, insbesondere einen Flüssigkeitsauffangbehälter,
   (d2) Umlenken der resultierenden mindestens einen, insbesondere einen, aufsteigenden Lösung des gasförmigen Anteils in dem flüssigen Anteil in mindestens einer, insbesondere in einer, oberhalb des mindestens einen, insbesondere einen, ersten Wärmetauschers fluchtend angeordneten Wendekammer, Eintreten des verbleibenden gasförmigen Anteils mit geringen Mengen an verbleibendem flüssigem Anteil in den mindestens einen, insbesondere in den einen, zweiten, fluchtend angeordneten zweiten Wärmetauscher einer Betriebstemperatur T2 < T1 und Sammeln der mindestens einen resultierenden konzentrierten Lösung des verbliebenen gasförmigen Anteils in mindestens einer, insbesondere in einer, unterhalb des mindestens einen, insbesondere des einen, zweiten Wärmetauschers angeordneten Sammelkammer zur Verhinderung des Rücklaufs von der besagten Lösung in den mindestens einen, insbesondere in den einen, ersten Wärmetauscher und zur Ausleitung der besagten Lösung durch mindestens eine, insbesondere durch eine, Auslaufvorrichtung sowie
   (d3) Ableiten der nicht kondensierten restlichen Gase aus mindestens einem, insbesondere aus einem, am oberen Ende des mindestens einen, insbesondere des einen, Gasabtrennenzylinders angeordneten mindestens einen, insbesondere einen, Abgasauslass,
(E) Befördern des mindestens einen in dem mindestens einen, insbesondere dem einen, Flüssigkeitsauffangbehälter befindlichen vereinigten Stoffgemischs über mindestens eine, insbesondere eine, Leitung, vorzugsweise mindestens eine, insbesondere eine Rohrleitung zu mindestens einem, insbesondere einem, am unteren Ende des mindestens einen, insbesondere einen, vertikalen Umdampfers mit kreisförmigem Querschnitt angeordneten Verteilerraum, das erfindungsgemäße Trennverfahren in dem mindestens einen Umdampfer (32) des Weiteren umfassend:
   (e1) Dosieren mindestens eines Mittels, vorzugsweise mindestens einer organischen und/oder anorganischen Säure, bevorzugt Schwefelsäure und/oder ortho-Phosphorsäure, in den mindestens einen, insbesondere in den einen, Verteilerraum zur Bindung der verbliebenen gasförmigen Anteile des vereinigten Stoffgemischs und Bilden eines von gasförmigen Anteilen befreiten Stoffgemischs,
   (e2) Erhitzen des mindestens einen, insbesondere einen, von dem mindestens einen, insbesondere dem einen, Verteilerraum vertikal nach oben strömenden Stoffgemischs in mindestens einem, insbesondere in einem, Rohrbündelwärmetauscher mit konzentrisch angeordneten Wärmetauscherrohren wobei der mindestens eine, insbesondere eine, Rohrbündelwärmetauscher mit dem über mindestens ein, insbesondere ein, Brüdenzentralrohr zurückgeleiteten heißen Brüden betrieben wird,
   (e3) Erwärmen des mindestens einen, insbesondere einen, ersten Stoffgemischs mit dem Brüden, der über das mindestens eine, insbesondere das eine, das mindestens eine, insbesondere eine, Brüdenzentralrohr jeweils konzentrisch umgebende mindestens eine, insbesondere eine, Brüdenrohr aus dem mindestens einen, insbesondere einen, erfindungsgemäßen Umdampfer durch mindestens einen, insbesondere durch einen, Brüdenauslass ausgeleitet und zur der mindestens einen, insbesondere der einen, Primärseite des mindestens einen, insbesondere einen, Eingangswärmetauschers transportiert wird,
   (e4) Ausleiten des erhitzten flüssigen Stoffgemischs aus dem mindestens einen, insbesondere aus dem einen, Verteilerraum aus den Austrittsöffnungen am oberen Ende des mindestens einen, insbesondere des einen, Rohrbündelwärmetauschers in mindestens einen, insbesondere in einen, Verdampferraum mindestens eines, insbesondere eines, den mindestens einen, insbesondere den einen, Rohrbündelwärmetauscher konzentrisch umhüllenden Außenbehälters (24) und Abtrennen des Brüden und Sammeln des resultierenden flüssigen Stoffgemischs aus dem mindestens einen, insbesondere aus dem einen Sammelraum,
   (e5) Sammeln von spritzenden Schäumen und Tropfen mit mindestens einem, insbesondere mit einem, oberhalb der Austrittsöffnungen und des mindestens einen, insbesondere des einen Verdampferraums (25) angeordneten Tropfenabprallblech in der Form einer sich nach unten öffnenden Mantelfläche eines flachen Kegelstumpfs,
   (e6) Ausleiten des Brüden aus dem mindestens einen, insbesondere aus dem einen, Verdampferraum in den mindestens einen, insbesondere den einen, unteren Abscheidering mindestens eines, insbesondere eines, als Zentrifugalabscheider wirkenden Tropfenabscheiders über mindestens einen, insbesondere über einen, Brüdenaustrittsstutzen, der um das mindestens eine, insbesondere um das eine, Brüdenrohr ringförmig angeordnet ist, wobei der Brüden in dem mindestens einen, insbesondere in dem einen, unteren Abscheidering - von innen nach außen gesehen - in die mindestens eine, insbesondere in die eine, umlaufende innere Kammer, durch den mindestens einen, insbesondere durch den einen, vertikal angeordneten umlaufenden Siebring zum Auffangen noch vorhandener Tropfen und Feststoffteilchen und in die mindestens eine, insbesondere in die eine, umlaufende äußere Kammer eintritt und diese durchläuft und durch mindestens einen, insbesondere durch einen, umlaufenden Siebring in die mindestens eine, insbesondere in die eine, innere Kammer des mindestens einen, insbesondere des einen, oberen Abscheiderings eintritt, wo der gereinigte Brüden durch mindestens einen, insbesondere durch einen, Brüdenauslass zumindest teilweise (i) zu mindestens einem, insbesondere zu einem, Brüdenverdichter zum Verdichten des gereinigten Brüden und zur Verdichtung und zur Rückführung des gereinigten Brüden in die mindestens eine, insbesondere in die eine, saubere Primärseite des mindestens einen, insbesondere des einen, Umdampfers als Antriebsenergie oder zur (ii) mindestens einer, insbesondere einer, sauberen Primärseite mindestens eines weiteren, insbesondere eines weiteren, in Kaskade geschalteten Umdampfers gleicher oder unterschiedlicher, vorzugsweise gleicher, Bauart geleitet wird sowie
   (e7) Ausleiten des Stoffgemischs in dem mindestens einen, insbesondere in dem einen, Sammelraum durch mindestens einen, insbesondere durch einen, Auslass am unteren Ende des mindestens einen, insbesondere des einen, Sammelraums und Fördern des besagten Stoffgemischs mit mindestens einer, insbesondere mit einer, Fördervorrichtung, vorzugsweise mindestens mit einer, insbesondere mit einer, Förderpumpe, in mindestens einen, insbesondere in einen, Fliehkraftabscheider, vorzugsweise in mindestens einen, insbesondere in einen, Hydrozyklon, und Auftrennen und Ausleiten des separierten flüssigen Anteils und des separierten festen Anteils.

In einer Ausführungsform des erfindungsgemäßen Trennverfahrens wird der mindestens eine, insbesondere eine, Umdampfer als Naturumlaufverdampfer betrieben.

In einer bevorzugten Ausführungsform des erfindungsgemäßen Trennverfahrens ist an der oberen kreisförmigen Kante des mindestens einen, insbesondere des einen, Rohrbündelwärmetauschers mindestens ein, insbesondere ein, umlaufendes, sich schräg nach unten öffnendes Abtropfblech angebracht.

In einer weiteren bevorzugten Ausführungsform des erfindungsgemäßen Trennverfahrens hat oder haben das mindestens eine Tropfenabprallblech, das mindestens eine Abtropfblech und/oder der Bereich der Austrittsöffnungen des mindestens einen Rohrbündelwärmetauschers eine superhydrophile und/oder superhydrophobe Oberfläche, wie sie vorstehend beschrieben wird.

In noch einer weiteren bevorzugten Ausführungsform des erfindungsgemäßen Trennverfahrens wird bei der Kaskadenschaltung dem mindestens einen, insbesondere dem einen, ersten Umdampfer auf seiner mindestens einen, insbesondere einen, Primärseite ein heißen Mediums einer Temperatur T3 über mindestens einen, insbesondere einen, Brüdeneingang zugeleitet und der durch mindestens einen, insbesondere durch einen, Brüdenaustritt austretende Brüden einer Temperatur T4 wird dem mindestens einen, insbesondere dem einen, Brüdeneingang auf der mindestens einen, insbesondere der einen, Primärseite mindestens eines, insbesondere eines, zweiten Umdampfers geleitet, aus dem der aus mindestens einem, insbesondere einem, Brüdenaustritt austretende Brüden einer Temperatur T5 wiederum zu dem mindestens einen, insbesondere dem einen, Brüdeneingang auf der mindestens einen, insbesondere einen, Primärseite mindestens eines, insbesondere eines, n-ten Umdampfers geleitet wird, wonach der Brüden einer Temperatur Tn durch mindestens einen, insbesondere durch einen, Brüdenaustritt zu der mindestens einen, insbesondere einen, Primärseite mindestens eines Wärmetauschers eines Endverbrauchers der Energie geleitet wird, wobei das gebildete Kondensat durch mindestens einen Kondensatauslass des mindestens einen Wärmetauschers zu mindestens einer Sammelleitung, vorzugsweise mindestens einer Wasserleitung, geleitet wird, wobei die Variable n = eine ganze Zahl ≥3 und T3 > T4 > T5 > Tn und die Umdampfer vorzugsweise baugleich sind.

In einer besonders bevorzugten Ausführungsform des erfindungsgemäßen Trennverfahrens hat das heiße Medium dieselbe stoffliche Zusammensetzung wie der Brüden.

Bei dem erfindungsgemäßen Trennverfahrens werden die aufzutrennenden biogenen, halbsynthetischen und/oder synthetischen Stoffgemische und ihre festen, flüssigen und gasförmigen Inhaltsstoffe, vorzugsweise aus der Gruppe, bestehend aus
- Abfallprodukten, ausgewählt aus der Gruppe, bestehend aus Gülle, Jauche, Fäkalien, Gärresten, Fermenten, Klärschlämmen, Wasser aus Nachklärbecken, Konzentraten der biologischen Reinigungsstufen und Rückständen von chemischen Wäschern, mikrobiologischen Reaktoren, gentechnologischen Anlagen, Filtern und Elektrofiltern und Rückständen aus der Abluftbehandlung und aus Klimaanlagen,
- Aufschlämmungen und Kulturen von Mikroorganismen und Zellen sowie Aufschlämmungen von zerkleinerten Pilzen, Pflanzen, Pflanzenresten, toten Tieren und Tierresten,
- nativen Biopolymeren, ausgewählt aus der Gruppe, bestehend aus Proteinen und Peptiden, Nukleinsäuren, alpha-Polysacchariden, beta-Polysacchariden, Lipiden, Polyhydroxyalkanoaten, Cutin, Suberin, Polylactiden, Polyhydroxybutyraten, thermoplastische Stärken, Thermoplasten auf Ligninbasis und Epoxyacrylaten auf der Basis von natürlichen Ölen,
- Wachsen, ausgewählt aus der Gruppe, bestehend aus Candelillawachs, Carnaubawachs, Japanwachs, Espartograswachs, Korkwachs, Guarumawachs, Reiskeimölwachs, Zuckerrohrwachs, Ouricurywachs, Montanwachs, absolute Blütenwachsen, Kuba-Palmenwachs, Baumwollwachs, Flachswachs, Torfwachs, Rosenwachs, Jasminwachs, Peethawachs, Myrtewachs, Wachsfeigenwachs, Walrat, Wollwachs, Schellack, Chinawachs, Bienenwachs, Bürzeldrüsenwachs, Ceresin, Ozokerit, Hartwachsen, Montanesterwachsen, Sasolwachsen, hydrierten Jojobawachsen, Wollwachsalkoholen (Eucerit) und modifizierte Bienenwachsen (Cerabellina)
- Körperflüssigkeiten, ausgewählt aus der Gruppe, bestehend aus Blut, Lymphe, Speichel, Magensaft, Sekretion des Pankreas, Galle, Urin, Schweiß, Muttermilch, Vaginalsekret, Tränenflüssigkeit, Nasensekret, Ejakulat, Menstruationsflüssigkeit, Surfactant,, Wasser des Auges, Hirnwasser, Aszites, Pleuraflüssigkeit, Pericardflüssigkeit, Gelenksflüssigkeit, Fruchtwasser und Ohrenschmalz,
- Feststoff-Flüssigkeit-Gas-Gemischen aus Erdölquellen, Erdgasquellen, Erzbergwerken, Kohlebergwerken und chemischen Reaktoren,
- anorganischen und organischen, niedermolekularen, oligomeren und hochmolekularen Feststoffen,
- anorganischen und organischen Lösemitteln,
- anorganischen und organischen Gasen und
- Lebensmitteln, Getränken und Lebensmittelvorprodukten.
ausgewählt, wie sie vorstehend aufgeführt sind.

Insbesondere wird bei dem erfindungsgemäßen Trennverfahren das zu trennende Stoffgemisch aus der Gruppe, bestehend aus Gülle, Jauche und Gärresten, ausgewählt, die
- als Feststoffanteile Pflanzenteile, Proteine und Peptide, Nukleinsäuren, alpha-Polysaccharide, beta-Polysaccharide, Lipide, Fermente, Enzyme, Mikroorganismen, Zucker, Zuckeralkohole, Zuckersäuren und Salze wie Kaliumnitrat, Natriumnitrit, Calciumhydrogenphosphat und Magnesiumsulfat gelöst oder dispergiert enthalten,
- als flüssige Anteile Wasser und nichtflüchtige organische Amine und
- als Gase Ammoniak und flüchtige primäre, sekundäre und tertiäre organische Amine
enthalten.

Vorzugsweise sind bei dem erfindungsgemäßen Trennverfahren die
- Temperatur T1 = 30 °C bis 60 °C,
- die Temperatur T2 = 10 °C bis 40 °C,
- die Temperatur T3 = 90 °C bis 110 °C und
- die Temperatur T4 = 80 °C bis 100 °C
- die Temperatur T5 = 70 °C bis 90 °C,
und die Differenzen T3 - T4 und T4 - T5 betragen vorzugsweise jeweils 5 °C bis 15 °C, und vorzugsweise ist die Differenz T5 - Tn = (n x 5) °C bis (n x 15) °C.

Bevorzugt wird das erfindungsgemäße Trennverfahren bei einem Druck von 0,5 bis 20 bar durchgeführt. Bei diesem Druckbereich sind noch keine aufwendigen Sicherheitsmaßnahmen zu treffen. Gegebenenfalls auftretender Überdruck kann durch an geeigneten Stellen angebrachten Überdruckventile abgelassen werden. Es empfiehlt sich daher generell, das erfindungsgemäße Trennverfahren in einem sehr gut klimatisierten und durchlüfteten Raum mit starken Absaugungen durchzuführen.

Vorzugsweise wird bei dem erfindungsgemäßen Trennverfahren das aufzutrennende, heiße Stoffgemisch im Trennverfahrensschritt (B) durch mechanische Einwirkung, Verwirbelung und/oder durch Schall aufgeschäumt.

Dabei ist es von Vorteil, einem stark schäumenden Stoffgemisch zur Änderung der Oberflächenspannung mindestens ein Entschäumer zur Unterdrückung einer zu intensiven Schaumbildung und einem nur schwach schäumenden Stoffgemisch zur Änderung der Oberflächenspannung mindestens ein Tensid zuzusetzen, um die Schaumbildung zu intensivieren.

Beispiele geeigneter Entschäumer, Antischaummittel oder Schauminhibitoren und ihre Wirkungsweise werden dem Lehrbuch von Johan Bieleman, Lackadditive, Wiley-VCH, 1998, 4.2 Entschäumung von wässrigen Anstrichstoffen, Seiten 101 bis 113, oder in Römpp Lexikon Lacke und Druckfarben, Georg Thieme Verlag, 1998, Seiten 39 und 40, "Antischaummittel", beschrieben.

Beispiele geeigneter Tenside werden in Römpp Lexikon Lacke und Druckfarben, Georg Thieme Verlag, 1998, Seiten 557 und 558, "Tenside", beschrieben.

In einer bevorzugten Ausführungsform des erfindungsgemäßen Trennverfahrens wird dem abgetrennten, aufgeschäumten, flüssigen und gasförmigen Anteil zur besseren Verarbeitung im Trennverfahrensschritt (D) mindestens ein Entschäumer zur Erhöhung der Oberflächenspannung zugesetzt.

In noch einer weiteren bevorzugten Ausführungsform des erfindungsgemäßen Trennverfahrens wird der besagte Anteil zur besseren Verarbeitung im Trennverfahrensschritt (D) mittels eines Schallfelds, insbesondere eines, Ultraschallfelds, akustisch entschäumt.

Bei der besonders bevorzugten Ausführungsform des erfindungsgemäßen Trennverfahrens wird dem Stoffgemisch in dem mindestens einen Verteilerraum des mindestens einen Umdampfers restliches Ammoniak und restliche organische Amine mit Schwefelsäure und/oder ortho-Phosphorsäure gebunden.

Bei einer weiteren bevorzugten Ausführungsform werden die in den Trennverfahrensschritten (D) und (E) abgetrennten organischen Feststoffanteile in mindestens einer Mühle mechanochemisch zu elementarem Kohlenstoff verarbeitet. Beispiele geeigneter mechanischer Mühlen sind Kugelmühlen, Hammermühlen, Pinned-Disk-Mühlen, Jet-Mühlen, Vibrationsmühlen, Schüttelmühlen, Horizontalmühlen, Attritoren und Planetenmühlen. Beispielsweise kann die in der deutschen Offenlegungsschrift DE 195 04 540 A1, Figuren 1a bis 4b, beschriebene mechanische Mühle.

Alternativ können insbesondere die in den Trennschritten und (I) abgetrennten biogenen Feststoffanteile (D) durch technische Pyrolyse, hydrothermale Karbonisierung und vapothermale Karbonisierung in Biokohle, insbesondere Pflanzenkohle, umgewandelt werden.

Den aufzutrennenden Stoffgemischen und/oder ihren festen und flüssigen Inhaltsstoffen können Feststoffe zur Oberflächenvergrößerung und/oder Dekontamination zugesetzt werden. Beispiele geeigneter Feststoffe sind Aktivkohlen, Biokohlen, Kohlenstoffnanoröhrchen, Kohlenstoffnanofasern, natürliche, halbsynthetische und synthetische Fasern, Mikrocellulose, Nanocellulose, Hohlfasern, Aerogele, Schichtsilikate, Silikate, Sande und mesoporen Materialien.

Die erfindungsgemäße Trennvorrichtung und das erfindungsgemäße Trennverfahrens können erfindungsgemäß auf den verschiedensten technischen Gebieten verwendet werden, wie zum Beispiel in der Landwirtschaft, der Forstwirtschaft und dem Gartenbau, zur Trennung azeotroper Gemische, zur Trinkwassergewinnung und Trinkwasserentsalzung, zur Herstellung von ultrareinem Wasser, zur Meerwasserentsalzung, zum Entgipsen von Grundwasser, für Sulfattrennungen, zur Aufbereitung von Brackwasser, zur Dekontamination von Wasser durch Öle, Schwermetalle und persistente organische Schadstoffe, zur Dekontamination von Stoffgemischen mit Aktivkohle im Kreislaufverfahren, zur Abtrennung, Fraktionierung und Rückgewinnung von flüchtigen organischen Verbindungen und Dämpfen, als Alternative zur Destillation und Rektifikation, zur Abtrennung von kolloidalen Oxiden und Hydroxiden, Erzen, Kohlen, Mikropartikeln, Mikroorganismen, Trübstoffen, Sedimenten und Sanden, zur Metallrückgewinnung, zur Trennung von Öl-Wasser-Emulsionen, zur Entwässerung von Latices, zur Gewinnung von Chlor, zum Ernten von Zellen in der Biotechnologie, zur Abtrennung von Eiweißen, Enzymen und Antibiotika in der Biotechnologie, zur Produktion von Antibiotika, zur Trocknung und Bildung von Nanosphären, Mikrosphären und Micellen, als Ersatz von und zur Kombination mit Mikrofiltration, Ultrafiltration, Nanofiltration und Umkehrosmose, Alternative zu oder Kombination mit Sedimentationsbecken, zum Einengen bei großtechnischen Prozessen, zur Unterstützung von und zur Kombination mit dem Lösung-Diffusionsmodell oder dem hydrodynamischen Modell der Membrantrennung, zum Ersatz und zur Unterstützung der Pervaporation, als Ersatz und Alternative zu Dialysen allgemein, in der Humanmedizin und Tiermedizin, in künstlichen Lungen und zur Blutwäsche, zur Eindickung von Säften, zur Milchtrocknung, zur Zuckerraffination, zur Reinigung von Biervorstufen und Brauereiprodukten, zur Auftrennung von Fett und Proteinanteilen bei der Erzeugung von Nahrungsmittelzusatzstoffen und zur Herstellung von Dispersionen und Emulsionen, die die Ostwaldreifung verzögern oder verhindern.

Die großen Mengen an kondensiertem Brüden haben die Qualität von destilliertem Wasser und können daher beispielsweise hervorragend für Desinfizierung von Ställen und zu anderen Reinigungszwecken verwendet werden. Außerdem können die Feststoffe, die bei dem erfindungsgemäßen Verfahren anfallen oder die verarbeitet werden sollen, mit dem destillierten Wasser gespült werden, um sie von Salzen zu befreien, wodurch die Salzfracht bei dem erfindungsgemäßen Verfahren signifikant erniedrigt wird.

Das erfindungsgemäße Verfahren und die erfindungsgemäße Vorrichtung können des Weiteren dazu dienen, das Ammoniak aus Ammoniakwäschern vom Waschwasser abzutrennen, zu reinigen und als konzentrierte Lösung zurück zu gewinnen.

Die vorstehende Aufzählung ist nicht abschließend, sondern nur beispielhaft und soll die Anwendungsbreite der erfindungsgemäßen Verwendung verdeutlichen.

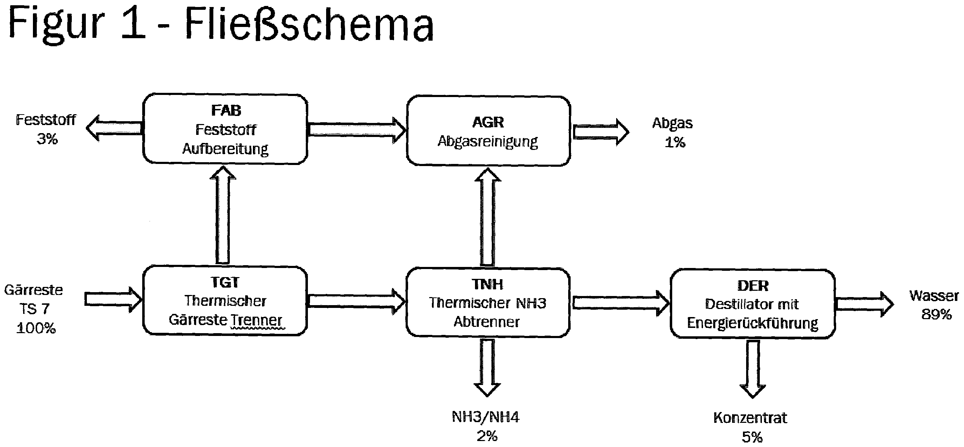

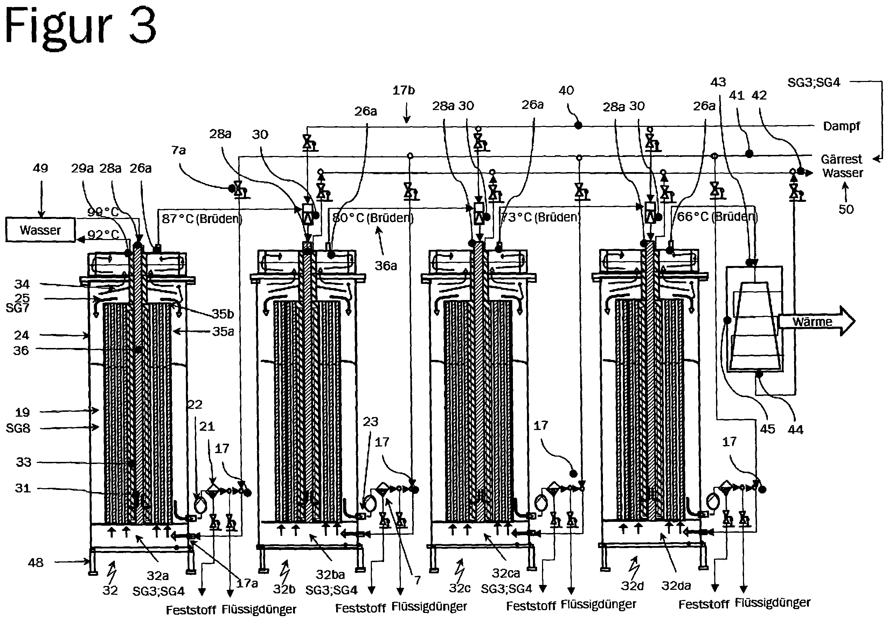

Im Folgenden werden der Gasabtrennenzylinder, der Umdampfer, die erfindungsgemäße Trennvorrichtung und das erfindungsgemäße Trennverfahren anhand der Figuren 1 bis 3 näher erläutert. Die Figuren 1 bis 3 dienen der Veranschaulichung des Prinzips der Erfindung und sind daher nicht maßstabsgetreu. Es zeigen
- Figur 1: ein Fließschema des Ablaufs des erfindungsgemäßen Trennverfahrens,
- Figur 2: die erfindungsgemäße Trennvorrichtung mit dem Fliehkraftabscheider 9, dem Gasabtrennenzylinder 18 und dem Umdampfer 32 und

In den Figuren 1 bis 3 haben die Bezugszeichen die folgende Bedeutung:
- Abgas: Nicht kondensierte gasförmige Anteile
- AGR: Abgasreinigung
- Dampf: Heißes gasförmiges Medium, Heizdampf
- DER: Umdampfer mit Energierückführung, Destillator mit Energierückführung
- FAB: Feststoffaufbereitung
- Feststoff: In den Fliehkraftabscheidern 9 und 23 abgetrennte feste Anteile
- Flüssigdünger: In den Fliehkraftabscheidern 9 und 21 abgetrennte flüssige Anteile
- Gülle/Gärrest: Stoffgemisch SG1
- SG1 - SG8: Stoffgemische
- SGTW: Trennvorrichtung zur Trennung biogener, halbsynthetischer und/oder synthetische Stoffgemische SG1 unter Wärmerückgewinnung
- TGT: Thermischer Gärrestetrenner, Hydrozyklon 9
- TNH: Thermischer Ammoniakabtrenner, Gasabtrennenzylinder 18
- Wasser: Kondensat des Brüden 36a

- 1: Fördervorrichtung, Förderpumpe
- 2: Heißer Strom des Stoffgemischs SG2
- 3: Eingangswärmetauscher
- 4: Heißes Kondensat des Brüden 36a
- 5: Kondensat
- 5a: Ablauf für das Kondensat 5
- 6: Fördervorrichtung, Ejektor
- 7: Vorrichtung zum Austragen des im Fliehkraftabscheider 9 und 21 abgetrennten Feststoffanteils »Feststoff«, Schleuse, Auslassventil
- 7a: Durchflussregelventil
- 8: Zuleitung des heißen Mediums »Dampf«
- 9: Fliehkraftabscheider
- 10: Erster Wärmetauscher
- 11: Zweiter Wärmetauscher
- 11a: Sammelkammer
- 12: Auslauf
- 13: Wendekammer
- 14: Abgasauslass
- 15: Auslass
- 16: Fördervorrichtung, Förderpumpe
- 17: Leitung, Rohrleitung
- 17a: Einlass für den Strom SG3; SG4
- 17b: Dampfleitung
- 18: Gasabtrennenzylinder
- 18a: Flüssigkeitsauffangbehälter des Gasabtrennenzylinders
- 19: Sammelraum des Umdampfers 32
- 20: Auslass für flüssige Anteile "Flüssigdünger"
- 21: Fliehkraftabscheider, Hydrozyklon
- 22: Fördervorrichtung, Förderpumpe
- 23: Auslass für das Stoffgemisch SG8
- 24: Außenbehälter
- 25: Verdampferraum
- 26: Brüdenaustrittsstutzen
- 26a: Brüdenauslass aus dem Verdampferraum 25
- 27: Brüdenverdichter
- 28: Brüdenauslass
- 28a: Zuführung von Heizwasser/Dampf aus dem Heizwasser/Dampf-Generator oder
- 29: Brüdenrohr zur Ausleitung des Brüden 36a
- 29a: Rohr zur Ausleitung und Rückleitung von heißen Wasser/Dampf-Gemisch zum Dampfgenerator
- 30: Förderervorrichtung, Ejektor
- 31: Brüdenübergang im Bereich des Rohrbündelwärmetauschers 35
- 32: Vertikaler Umdampfer
- 32a: Verteilerraum
- 32b: Zweiter vertikaler Umdampfer der Kaskade
- 32c: Dritter vertikaler Umdampfer der Kaskade
- 32d: Vierter vertikaler Umdampfer der Kaskade
- 32ba: -
- 32da: Verteilerräume für die vereinigten Stoffgemische SG3; SG4
- 33: Blindrohr
- 34: Tropfenabprallblech
- 35: Rohrbündelwärmetauscher
- 35a: Wärmetauscherrohr
- 35b: Austrittsöffnung
- 36: Brüdenzentralrohr
- 36a: Brüden
- 32b: Zweiter baugleicher Umdampfers
- 37: - entfällt -
- 38: Zentrifugalabscheider als Tropfenabscheider
- 39: - entfällt -
- 40: Zentrale Versorgung mit heißem Medium, zentrale Dampfversorgung »Dampf«
- 41: Zentrale Zufuhr vom Stoffgemisch SG1 »Gärrest«
- 42: Zentraler Ausgang für das Kondensat »Wasser«
- 43: Eingang oder Primärseite des Wärmetauschers für Endverbraucher 44
- 44: Kondensatauslass
- 45: Wärmetauscher für Endverbraucher
- 46: Unterer Abscheidering
- 46a: Umlaufende innere Kammer
- 46b: Vertikal angeordneter umlaufender Siebring
- 47: Oberer Abscheidering
- 47a: Innere Kammer
- 47b: Umlaufender Siebring
- 48: Standfuß
- 49: Heizwasser/Dampf-Generator
- 50: Sammelleitung für Wasser

Beispiele für Strömungsrichtungen der Stoffgemische SG und des Brüden 36a 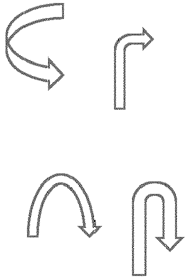
99 °C Temperatur des heißen Mediums Wasser
92 °C Temperatur des aus dem Brüdenrohr 29 zurückgeleiteten Wassers
87 °C Temperatur des Brüden 36a aus dem Umdampfer 32
80 °C Temperatur des Brüden 36a aus dem Umdampfer 32b
73 °C Temperatur des Brüden 36a aus dem Umdampfer 32c
66 °C Temperatur des Brüden 36a aus dem Umdampfer 32d

### Ausführliche Beschreibung der Figuren 1 bis 3

### Figur 1

Die Figur 1 zeigt das Fließschema des Ablaufs des erfindungsgemäßen Trennverfahrens. 100 % Ammoniak und Amine enthaltende wässrige Gärreste aus einer Biogasanlage wurden in einem thermischen Gärrestetrenner TGT in 3 % Feststoff, die einer Feststoffaufbereitung FAB zugeführt wurden, und in einen Ammoniak und Amine enthaltenden flüssigen Anteil getrennt. Der flüssige Anteil wurde in einen thermischen Ammoniakabtrenner TNH geleitet, worin 2% Stickstoffverbindungen abgetrennt wurden. Die dabei entstandenen Abgase wurden zusammen mit den Abgasen aus der Feststoffaufbereitung einer Abgasreinigung zugeführt und 1% gereinigtes Abgas wurden in die Atmosphäre abgelassen. Der von den Stickstoffverbindungen befreite flüssige Anteil wurde in einen Destillator mit Energierückführung DER oder Umdampfer 32 geführt, dem 5 % Konzentrat entnommen wurden. Nicht zuletzt resultierten 89% Wasser mit der Qualität von destilliertem Wasser, das hervorragend zu Desinfektions-, Entsalzungs- und anderen Reinigungszwecken verwendet werden konnte.

### Figur 2

### Die kontniuierliche Auftrennung von Gülle in ihre festen, flüssigen und gasförmigen Anteile in einer erfindungsgemäßen Trennvorrichtung (erfindungsgemäßes Trennverfahren)

Die erfindungsgemäße Trennvorrichtung wies eine Verarbeitungskapazität von 1 m³ Gülle/Stunde auf. Sie war in einem begehbaren Standardcontainer untergebracht, der mit einer starken Belüftung, einer Klimaanlage, einer Sprühanlage für Wasser und einem Auslass zu einem Sammelbehälter für Abwasser ausgerüstet war. Außerdem waren in dem Container Sensoren angebracht, um bei dem Austritt giftiger Gase einen Alarm auszulösen. Der Container wies des Weiteren an einer Querseite eine Eingangstür in einen Raum für die Steuerzentrale auf, von der aus die erfindungsgemäße Trennvorrichtung elektronisch gesteuert wurde. Die Steuerzentrale war von der erfindungsgemäßen Trennvorrichtung durch eine Wand mit einer gasdichten Tür mit Sichtfenster getrennt. Außerdem konnte die erfindungsgemäße Vorrichtung noch optisch durch Webcams überwacht werden.

Alle Bauteile, die mit den korrosiven Inhaltsstoffen der Gülle, heißem Dampf (Dampf) und heißem Brüden 36a in Berührung kamen, waren aus V4A-Stahl gefertigt. Die Säurecontainer für die in den Verteilerraum 32a des vertikalen Umdampfers 32 dosierte Schwefelsäure und/oder Phosphorsäure bestanden aus Polypropylen.

Alle Komponenten der erfindungsgemäßen Trennvorrichtung waren auf Standfüßen 48 aufgebracht, die Erschütterungen und Vibrationen dämpften.

Die erfindungsgemäße Trennvorrichtung SGTW zur kontinuierlichen Trennung von Gülle SG1 in ihre festen, flüssigen und gasförmigen Anteile unter Wärmerückgewinnung umfasste - dem Ablauf des erfindungsgemäßen Verfahrens folgend -
(A) eine Förderpumpe 1 zum Fördern eines Güllestroms SG1 durch einen Eingangswärmetauscher 3 zum Aufheizen des Güllestroms SG1 zur Bildung eines heißen Güllestromstroms 2; SG2 durch das heiße Kondensat 4 des Brüden 36a, aus dem Umdampfer 32. Der Wärmetauscher 3 wies einen Ablauf 5a für das abgekühlte Kondensat 5 des Brüden 36a und einen Auslass "Abgas" für Dämpfe des Kondensats 5 des Brüden 36a auf.

Des Weiteren wies die erfindungsgemäße Trennvorrichtung SGTW
(B) eine Rohrleitung zur Förderung des mindestens einen heißen Güllestroms SG2; 2 von dem Wärmetauscher 3 in einen Hydrozyklon 9, der Firma Belki, Dänemark, mittels eines mit Heißdampf "Dampf" betriebenen Ejektors 6 zum Aufschäumen des flüssigen oder flüssigen und gasförmigen Anteils des heißen Güllestroms SG2; 2 durch die Änderung der Oberflächenspannung beim Eintritt und im Inneren des Hydrozyklons 9 zur Erzeugung eines Dichteunterschieds zwischen dem flüssigen Anteil und dem festen Anteil des heißen Güllestroms SG2; 2, sodass die Dichte des festen Anteils > die Dichte des flüssigen und gasförmigen Anteils wurde.

Dem Hydrozyklon 9 war
(C) eine Schleuse 7 zum Austragen des abgetrennten Feststoffanteils "Feststoff" zugeordnet.

Von dem Hydrozyklon 9 verlief
(D) eine Rohrleitung zur Förderung des abgetrennten, aufgeschäumten, flüssigen und gasförmigen Anteils SG3 der Gülle in den Flüssigkeitsauffangbehälter 18a des vertikalen Gasabtrennenzylinders 18 mit kreisförmigem Querschnitt.

Der Gasabtrennenzylinder 18 umfasste
(d1) einen oberhalb des Flüssigkeitsauffangbehälters 18a fluchtend zu dem Gasabtrennenzylinder 18 angeordneten ersten Wärmetauscher 10 mit einer Betriebstemperatur von 45 °C zum Auskondensieren und zur Rückführung von kondensiertem flüssigem Anteil SG4, in dem eine geringe Menge von gasförmigem Anteil gelöst war, in den Flüssigkeitsauffangbehälter 18a.

Oberhalb des ersten Wärmetauschers 10 war
(d2) eine fluchtend angeordnete Wendekammer 13 zur Umlenkung des verbliebenden gasförmigen Anteils mit geringen Mengen an verbliebendem flüssigem Anteil SG5 zum Eintritt in den zweiten, fluchtend angeordneten Wärmetauscher 11 einer Betriebstemperatur von 20 °C zum Auskondensieren einer 20-prozentigen Lösung SG6 des gasförmigen Anteils in dem flüssigen Anteil und zum Sammeln von SG6 in einer unterhalb des zweiten Wärmetauschers 11 angeordneten Sammelkammer 11a zur Verhinderung des Rücklaufs und zur Ausleitung von SG6 durch mindestens eine Auslaufvorrichtung 12.

Am oberen Ende des Gasabtrennenzylinders 18 war
(d3) ein Abgasauslass 14 zur Ableitung der nicht kondensierten restlichen Gase angeordnet.

Die erfindungsgemäße Trennvorrichtung wies außerdem
(E) eine Rohrleitung 17 zum Befördern des in dem Flüssigkeitsauffangbehälter 18a befindlichen vereinigten Stoffgemischs SG3; SG4 in einen am unteren Ende des vertikalen Umdampfers 32 mit kreisförmigem Querschnitt angeordneten Verteilerraum 32a auf.

Der Umdampfer 32 umfasste des Weiteren
(e1) eine Vorrichtung zur Dosierung (nicht wiedergegeben) von Schwefelsäure in den Verteilerraum 32a zur Salzbildung mit den in dem vereinigten Stoffgemisch SG3; SG4 verbliebenen gasförmigen organischen Aminen und Ammoniak auf. Dadurch resultierte ein von gasförmigen Anteilen befreites Stoffgemisch SG7,
(e2) einen Rohrbündelwärmetauscher 35 mit konzentrisch angeordneten Wärmetauscherrohren 35a zum Erhitzen des vertikal nach oben strömenden Stoffgemischs SG7, wobei 35 mit über mindestens ein Brüdenzentralrohr 36 zurückgeleitetem heißem Brüden 36a betreibbar war,
(e3) ein das eine Brüdenzentralrohr 36 konzentrisch umgebendes Brüdenrohr 29 zur Ausleitung des Brüden 36a aus dem Umdampfer 32 durch einen Brüdenauslass 28 zu dem Eingangswärmetauscher 3 zum Erwärmen des Güllestroms SG1,
(e4) Austrittsöffnungen 35b am oberen Ende des Rohrbündelwärmetauschers 35 zum Ausleiten des erhitzten flüssigen Stoffgemischs SG7 in einen Verdampferraum 25 eines den Rohrbündelwärmetauscher 35 konzentrisch umhüllenden Außenbehälters 24 zur Abtrennung des Brüden 36a und Sammeln des resultierenden flüssigen Stoffgemischs SG8 in dem Sammelraum 19,
(e5) ein oberhalb der Austrittsöffnungen 35b und des mindestens einen Verdampferraums 25 angeordnetes Tropfenabprallblech 34 in der Form einer sich nach unten öffnenden Mantelfläche eines flachen Kegelstumpfs; an der oberen kreisförmigen Kante des Rohrbündelwärmetauschers 35 war noch ein umlaufendes, sich schräg nach unten öffnendes Abtropfblech angebracht; dabei wiesen das Tropfenabprallblech 34, das Abtropfblech und der Bereich der Austrittsöffnungen 35b des Rohrbündelwärmetauscher 35 eine superhydrophobe Oberflächenbeschichtung aus Zinkoxid/Polystyrol-Nanocompositen auf,
(e6) einen Brüdenaustrittsstutzen 26, der um das Brüdenrohr 36b ringförmig angeordnet war, zum Ausleiten des Brüden 36a aus dem Verdampferraum 25 in den unteren Abscheidering 46 des als Zentrifugalabscheider wirkenden Tropfenabscheiders 38; der untere Abscheidering 46 umfasste des Weiteren - von innen nach außen gesehen - eine umlaufende innere Kammer 46a, einen vertikal angeordneten umlaufenden Siebring 46b zum Auffangen noch vorhandener Tropfen und Feststoffteilchen und zum Durchtritt des Brüden 36a in und durch die umlaufende äußere Kammer 47c und durch den umlaufenden Siebring 47b in die innere Kammer 47a des mindestens einen oberen Abscheiderings 47; der obere Abscheidering 47 umfasste außerdem einen Brüdenauslass 47d für die Zuleitung eines Teils des gereinigten Brüden 36a zu einem Ejektor als Brüdenverdichter 27 zum Verdichten des gereinigten Brüden 36a und zur Verdichtung und zur Rückführung des gereinigten Brüden 36a in die saubere Primärseite des Umdampfers 32 als Antriebsenergie sowie
(e7) einen Auslass 23 am unteren Ende des Sammelraums 19 für das Stoffgemisch SG8 und mindestens eine Förderpumpe 22 zur Förderung des Stoffgemischs SG8 in einen Hydrozyklon 21 der Firma Belki, Dänemark, zur Auftrennung und Ausleitung des flüssigen Anteils "Flüssigdünger" und des festen Anteils "Feststoff".

Das erfindungsgemäße Trennverfahren für Gülle umfasste demnach die folgenden Verfahrensschritte:
(A) Fördern des Güllestroms SG1 mit einer Förderpumpe 1 durch den Eingangswärmetauscher 3, Aufheizen des Güllestroms SG1 und Bilden eines heißen Güllestroms SG2; 2 durch das heiße Kondensat 4 des Brüden 36a, wobei der Eingangswärmetauscher 3 einen Ablauf 5 für das abgekühlte Kondensat 5 und einen Auslass "Abgas" für Dämpfe des Kondensats 5 des Brüden 36a aufweist,
(B) Fördern des heißen Güllestroms SG2; 2 von dem Eingangswärmetauscher 3 in den Hydrozyklon 9 über mindestens eine Rohrleitung mittels eines mit heißem Dampf "Dampf" betriebenen Ejektors 6 und Aufschäumen des flüssigen und gasförmigen Anteils des mindestens einen heißen Güllestroms SG2; 2 durch die gezielte Änderung der Oberflächenspannung beim Eintritt und im Inneren des Hydrozyklons 9 und Erzeugen eines Dichteunterschieds zwischen dem flüssigen und gasförmigen Anteil und dem festen Anteil des heißen Güllestroms SG2; 2, sodass die Dichte des festen Anteils > die Dichte des flüssigen und gasförmigen Anteils wurde,
(C) Austragen des in dem Hydrozyklon 9 Feststoffe "Feststoff" mit einer Schleuse 7 und
(D) Förderung und gegebenenfalls Entschäumen des abgetrennten, aufgeschäumten, flüssigen und gasförmigen Anteils SG3 der Gülle durch eine Rohrleitung in den Flüssigkeitsauffangbehälter 18a des Gasabtrennenzylinders 18 mit kreisförmigem Querschnitt,

Das erfindungsgemäße Trennverfahren in dem Gasabtrennenzylinder 18 umfasste ferner:
(d1) Auskondensieren des flüssigen Anteils SG4, in dem eine geringe Menge von Ammoniak und flüchtigen organischen Aminen gelöst war, in den oberhalb des Flüssigkeitsauffangbehälters 18a fluchtend zu dem Gasabtrennenzylinder 18 angeordneten ersten Wärmetauscher 10 mit einer Betriebstemperatur von 45 °C und Rückführen von SG4 in den Flüssigkeitsauffangbehälter 18a,
(d2) Umlenken der resultierenden aufsteigenden Lösung SG5 von Ammoniak und flüchtigen organischen Aminen in dem flüssigen Anteil in die oberhalb des ersten Wärmetauschers 10 fluchtend angeordnete Wendekammer 13, Eintreten des verbliebenen Anteils an Ammoniak und flüchtigen organischen Aminen in geringen Mengen an verbliebener flüssiger Lösung SG5 in den zweiten, fluchtend angeordneten Wärmetauscher 11 einer Betriebstemperatur von 20 °C und Sammeln der resultierenden konzentrierten Lösung SG6 der verbliebenen flüchtigen Amine und des Ammoniaks in der unterhalb des zweiten Wärmetauschers 11 angeordneten Sammelkammer 11a zur Verhinderung des Rücklaufs von SG6 in 10 und zur Ausleitung von SG6 durch die Auslaufvorrichtung 12 sowie
(d3) Ableiten der nicht kondensierten restlichen Gase aus dem am oberen Ende des Gasabtrennenzylinders 18 angeordneten Abgasauslass 14.

Das erfindungsgemäße Trennverfahren findet seine Fortsetzung in dem vertikalen Umdampfer 32 und umfasst die folgenden Verfahrensschritte:
(E) Befördern des in dem einen Flüssigkeitsauffangbehälter 18a befindlichen vereinigten Stoffgemischs SG3; SG4 über eine Rohrleitung 17 in dem am unteren Ende des vertikalen Umdampfers 32 mit kreisförmigem Querschnitt angeordneten Verteilerraum 32a, gefolgt von
(e1) Dosieren von Schwefelsäure in den Verteilerraum 32a zur Bindung der verbliebenen Anteile an Ammoniak und flüchtigen Aminen in den vereinigten Stoffgemisch SG3; SG4 als Sulfate und Bilden eines von gasförmigen Anteilen befreiten Stoffgemischs SG7,
(e2) Erhitzen des vertikal nach oben strömenden Stoffgemischs SG7 in den Rohrbündelwärmetauscher 35 mit konzentrisch angeordneten Wärmetauscherrohren 35a, wobei 35 mit über das Brüdenzentralrohr 36 zurückgeleitetem heißem Brüden 36a betrieben wurde,
(e3) Erwärmen der Gülle SG1 mit dem Brüden 36a, der über das das Brüdenzentralrohr 36 konzentrisch umgebende Brüdenrohr 29 aus dem Umdampfer 32 durch den Brüdenauslass 28 ausgeleitet und zur Primärseite des Eingangswärmetauschers 3 transportiert wurde,
(e4) Ausleiten des erhitzten flüssigen Stoffgemischs SG7 aus den Austrittsöffnungen 35b am oberen Ende des Rohrbündelwärmetauschers 35 in den Verdampferraum 25 des den Rohrbündelwärmetauscher 35 konzentrisch umhüllenden Außenbehälters 24 und Abtrennen des Brüden 36a und Sammeln des resultierenden flüssigen Stoffgemischs SG8 in dem Sammelraum 19,
(e5) Sammeln von spritzenden Schäumen und Tropfen mit dem oberhalb der Austrittsöffnungen 35b und dem Verdampferraum 25 angeordneten Tropfenabprallblech 34 mit superhydrophober Oberfläche in der Form einer sich nach unten öffnenden Mantelfläche eines flachen Kegelstumpfs im Sammelraum 19, was noch durch das Abtropfblech mit superhydrophober Oberfläche beschleunigt wurde,
(e6) Ausleiten des Brüden 36a aus dem Verdampferraum 25 in den unteren Abscheidering 46 des als Zentrifugalabscheider wirkenden Tropfenabscheiders 38 über den Brüdenaustrittsstutzen 26, der um das Brüdenrohr 36b ringförmig angeordnet war, wobei der Brüden 36a in dem unteren Abscheidering 46 - von innen nach außen gesehen - in die umlaufende innere Kammer 46, durch den vertikal angeordneten umlaufenden Siebring 46b zum Auffangen noch vorhandener Tropfen und Feststoffteilchen und in die mindestens eine umlaufende äußere Kammer 47c eintrat und diese durchlief und durch den umlaufenden Siebring 47b in die umlaufende innere Kammer 47a des oberen Abscheiderings 47 eintrat, wo der gereinigte Brüden 36a durch den Brüdenauslass 47d teilweise zu dem Brüdenverdichter 27 zum Verdichten des gereinigten Brüden 36a und zur Verdichtung und zur Rückführung des gereinigten Brüden 36a in die saubere Primärseite des Umdampfers 32 als Antriebsenergie geleitet wurde, sowie
(e7) Ausleiten des Stoffgemischs SG8 durch den Auslass 23 am unteren Ende des Sammelraums 19 und Fördern von SG8 mit der Förderpumpe 22 in den Hydrozyklon 21 und Auftrennen und Ausleiten des separierten flüssigen Anteils "Flüssigdünger" und des separierten des festen Anteils "Feststoff".

Die abgetrennten Feststoffe, bei denen es sich vor allem um an Pflanzenreste handelte, konnten beispielsweise durch eine mechanische Mühle, insbesondere eine Kugelmühle, zu Aktivkohle verarbeitet werden. Außerdem konnten sie durch technische Pyrolyse, hydrothermale Karbonisierung und vapothermale Karbonisierung in Pflanzenkohle umgewandelt werden.

### Figur 3

### Kaskade aus vier baugleichen Umdampfern für die Trennung des flüssigen und des festen Anteils der Gülle

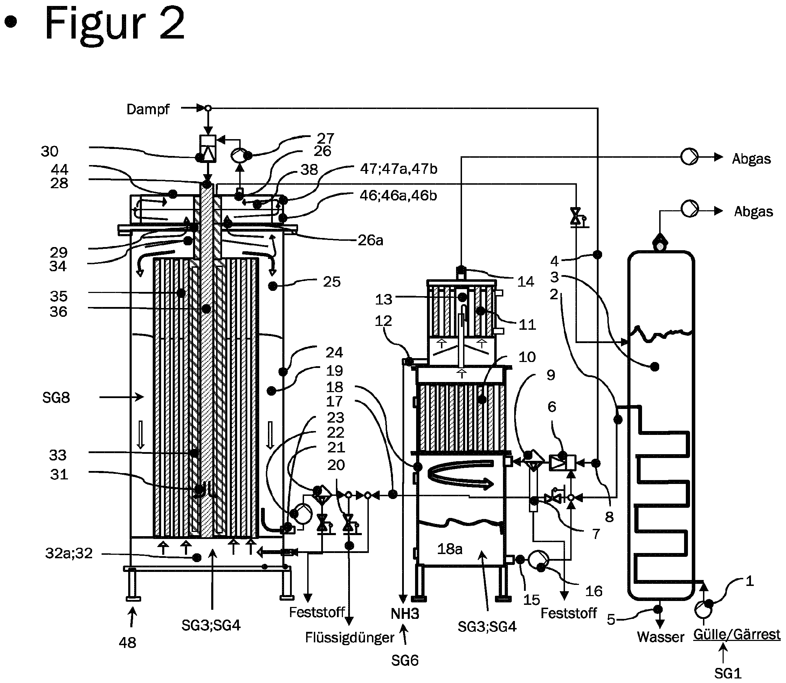

Die Kaskade umfasste vier baugleiche Umdampfer 32, 32b, 32c und 32d. Die vier Umdampfer wiesen den gleichen Aufbau wie der Umdampfer 32 der Figur 2 auf nur, dass sie keinen oberen und unteren Abscheidering 46; 47 aufwiesen, sodass der Brüden 36a direkt dem jeweiligen Verdampferraum 25 über den Brüdenauslass 26a entnommen wurde. Dem Umdampfer 32 wurde über einen Brüdenauslass 26a Brüden 36a eine Temperatur von 87 °C entnommen und mit einem Ejektor 30 in die Primärseite des Umdampfers 32b eingespeist. Dem Umdampfer 32c wurde ebenfalls aus dem Verdampferraum 25 über einen Brüdenauslass 26a ein Brüden 36a eine Temperatur von 80 °C entnommen und mit einem Ejektor 30 in die Primärseite des Umdampfers 32c eingespeist. Diesem wurde wiederum aus dem Verdampferraum 25 Brüden 36a einer Temperatur von 73 °C entnommen und mit einem Ejektor 30 in die Primärseite des Umdampfers 32d eingespeist. Der dem Brüdenauslass 26a dem Verdampferraum 25 entnommene Brüden 36a einer Temperatur von 66 °C wurde in die Primärseite eines Wärmetauschers 45 eines Endverbrauchers eingespeist. Der Wärmetauscher 45 wies einen Kondensatauslass 44, aus dem kondensierter Brüden 36a in die Sammelleitung 50 eingeleitet wurde.

Dem Wärmetauscher 45 konnte Wärmeenergie "Wärme" entzogen und zum Heizen oder zur Produktion von Elektrizität verwendet werden.

Die Ejektoren 30 wurden mit Dampf aus einer zentralen Dampfleitung 17b betrieben.

Den Verteilerräumen 32a, 32ba, 32ca und 32da der Umdampfer der Kaskade wurde über Rohrleitungen 17 und Einlässe 17a das Stoffgemisch SG3; SG4 "Gärrest" aus dem Flüssigkeitsauffangbehälter 18a eines Gasabtrennenzylinders 18 (vgl. Figur 2) zugeführt. Das Ammoniak und die flüchtigen Amine in den jeweiligen Stoffgemischen SG3; SG4 in den Verteilerräumen wurden mit Schwefelsäure als Salze gebunden. Die resultierenden, von Gasen befreiten Stoffgemische SG7 strömten durch die Rohrbündelwärmetauscher 35 in die Verdampferräume 25, worin Tropfen, Spritzer und Schäume der resultierenden Stoffgemische SG8 durch die Tropfenabprallbleche 34 zurückgeworfen wurden. Die Stoffgemische SG8 wurden in den Sammelräumen 19 der Außenbehälter 24 gesammelt und über die Auslässe 23 mithilfe der Förderpumpen 22 zu den Hydrozyklonen 21 gepumpt, worin die aufgeschäumten flüssigen Anteile der Stoffgemische SG8 von den festen Anteilen "Feststoff" getrennt wurden. Die abgetrennten flüssigen Anteile der Stoffgemische SG8 wurden als "Flüssigdünger" ausgetragen. Die festen Anteile "Feststoff" wurden über Auslassventile 7 ausgetragen.

Die Stoffströme in der Kaskade wurden mithilfe von elektronisch gesteuerten Durchflussregelventilen 7a geregelt.

Das in der Sammelleitung 50 gesammelte Wasser wurde dem zentralen Ausgang 42 für das Kondensat "Wasser" entnommen und hatte die Qualität von destilliertem Wasser.

Die Kaskade konnte mit einem besonderes niedrigen Energieaufwand betrieben werden und wies eine besonders hohe Trennwirkung auf.

## Patentansprüche

1. Aus thermisch, mechanisch und gegen Korrosion stabilen Materialien aufgebaute Trennvorrichtung,SGTW zur kontinuierlichen oder diskontinuierlichen Trennung biogener, halbsynthetischer und/oder synthetischer Stoffgemische (SG1) in ihre festen, flüssigen und gasförmigen Anteile unter Wärmerückgewinnung, die Trennvorrichtung,SGTW, umfassend:
mindestens einen aus thermisch, mechanisch und chemisch stabilen und gegen Korrosion stabilen Materialien aufgebauten Gasabtrennzylinder (18) mit kreisförmigem Querschnitt zur Abtrennung von gasförmigen Anteilen biogener, halbsynthetischer und/oder synthetischer Stoffgemische (SG1), wobei der mindestens eine Gasabtrennzylinder (18) mindestens einen Flüssigkeitsauffangbehälter (18a) umfasst;
mindestens eine Leitung zur Förderung mindestens eines heißen Stroms (SG2; 2) mindestens eines halbsynthetischen und/oder synthetischen Stoffgemischs (SG1) in mindestens einen Fliehkraftabscheider (9) mittels mindestens einer mit einem heißen Medium (Dampf) betriebenen Fördervorrichtung (6) zum Aufschäumen des flüssigen oder flüssigen und gasförmigen Anteils des mindestens einen heißen Stroms (SG2; 2) durch die Änderung der Oberflächenspannung beim Eintritt und im Inneren des mindestens einen Fliehkraftabscheiders (9) zur Erzeugung eines Dichteunterschieds zwischen dem flüssigen Anteil und dem festen Anteil des mindestens einen heißen Stoffgemischs (SG2; 2), sodass die Dichte des festen Anteils > die Dichte des flüssigen und gasförmigen Anteils ist,
mindestens eine Vorrichtung (7) zum Austragen des in dem mindestens einen Fliehkraftabscheider (9) abgetrennten Feststoffanteils (Feststoff),
mindestens eine Leitung zur Förderung des abgetrennten, aufgeschäumten, flüssigen und gasförmigen Anteils (SG3),
mindestens eine Leitung zur Förderung des abgetrennten, aufgeschäumten, flüssigen und gasförmigen Anteils (SG3) in den mindestens einen Flüssigkeitsauffangbehälter (18a) des mindestens einen Gasabtrennzylinders (18), wobei der mindestens eine Gasabtrennzylinder (18) umfasst:
mindestens einen oberhalb des mindestens einen Flüssigkeitsauffangbehälters (18a) fluchtend zu mindestens einem Gasabtrennzylinder (18) angeordneten ersten Wärmetauscher (10) mit einer Betriebstemperatur T1 zum Auskondensieren und zur Rückführung von kondensiertem flüssigem Anteil (SG4), in dem eine geringe Menge von gasförmigem Anteil gelöst ist, in den mindestens einen Flüssigkeitsauffangbehälter (18a),
mindestens einen zweiten fluchtend angeordneten Wärmetauscher (11) mit einer Betriebstemperatur T2 < T1,
mindestens eine unterhalb des mindestens einen zweiten Wärmetauschers (11) angeordnete Sammelkammer (11a),
mindestens eine Auslaufvorrichtung (12),
mindestens eine oberhalb des mindestens einen ersten Wärmetauschers (10) fluchtend angeordnete Wendekammer (13) zur Umlenkung des verbleibenden gasförmigen Anteils mit geringen Mengen an verbleibendem flüssigem Anteil (SG5) zum Eintritt in den mindestens einen zweiten Wärmetauscher (11) mit einer Betriebstemperatur T2 < T1 zum Auskondensieren mindestens einer Lösung des gasförmigen Anteils in einem flüssigen Anteil (SG6) und zum Sammeln vom flüssigen Anteil (SG6) in der mindestens einen unterhalb des mindestens einen zweiten Wärmetauschers (11) angeordneten Sammelkammer (11a) zur Verhinderung des Rücklaufs und zur Ausleitung von (SG6) durch die mindestens eine Auslaufvorrichtung (12) sowie (iv3) mindestens einen am oberen Ende des mindestens einen Gasabtrennzylinders (18) angeordneten Abgasauslass (14) zur Ableitung der nicht kondensierten restlichen Gase (Abgase);
mindestens einen als Zentrifugalabscheider wirkenden Tropfenabschneider (38),
mindestens einen Brüdenverdichter (27),
mindestens eine Fördervorrichtung (22),
mindestens einen Fliehkraftabschneider (21),
mindestens einen dem Gasabtrennzylinder (18) nachgeschalteten aus thermisch, mechanisch und chemisch stabilen und gegen Korrision stabilen Materialien aufgebauten vertikalen Umdampfer (32) mit kreisförmigem Querschnitt zur Herstellung von gereinigten Brüden (36a), wobei der Umdampfer (32) die folgenden Komponenten umfasst:
mindestens einen am unteren Ende des mindestens einen vertikalen Umdampfers (32) mit kreisförmigem Querschnitt angeordneten Verteilerraum (32a), enthaltend ein Stoffgemisch (SG3; SG4) aus gasförmigen Anteilen und festen Anteilen in niedriger Konzentration in mindestens einem flüssigen Anteil,
mindestens eine Vorrichtung zur Dosierung mindestens eines Mittels in den mindestens einen Verteilerraum (32a) zur Bindung der verbliebenen gasförmigen Anteile des Stoffgemischs (SG3; SG4) und zur Bildung eines von gasförmigen Anteilen befreiten Stoffgemischs (SG7),
mindestens einen Rohrbündelwärmetauscher (35) mit konzentrisch angeordneten Wärmetauscherrohren (35a) zum Erhitzen des vertikal nach oben strömenden Stoffgemischs (SG7), wobei der Rohrbündelwärmetauscher (35) mit über mindestens ein Brüdenzentralrohr (36) zurückgeleitetem heißem Brüden (36a) betreibbar ist,
mindestens einen den mindestens einem Rohrbündelwärmetauscher (35) konzentrisch umhüllenden Außenbehälter (24) mit mindestens einem Verdampferraum (25) und mindestens einem Sammelraum (19),
mindestens einen Brüdenauslass (28)
mindestens ein das mindestens eine Brüdenzentralrohr (36) konzentrisch umgebendes Brüdenrohr (29) zur Ausleitung des Brüden (36a) aus dem Umdampfer (32) durch den mindestens einen Brüdenauslass (28) zur Verwendung als Wärmequelle,
Austrittsöffnungen (35b) am oberen Ende des mindestens einen Rohrbündelwärmetauschers (35) zum Ausleiten des erhitzten flüssigen Stoffgemischs (SG7) in den mindestens einen Verdampferraum (25) des mindestens eines den mindestens einen Rohrbündelwärmetauscher (35) konzentrisch umhüllenden Außenbehälters (24) zur Abtrennung des Brüden (36a) und Sammeln des resultierenden flüssigen Stoffgemischs (SG8) in dem mindestens einen Sammelraum (19),
mindestens ein oberhalb der Austrittsöffnungen (35b) und des mindestens einen Verdampferraums (25) angeordnetes Tropfenabprallblech (34) in der Form einer sich nach unten öffnenden Mantelfläche eines flachen Kegelstumpfs,
mindestens einen unteren Abscheidering (46) mindestens eines als Zentrifugalabscheider wirkenden Tropfenabscheiders (38) und mindestens einen oberen Abscheidering (47),
mindestens einen Brüdenaustrittsstutzen (26), der um das mindestens eine Brüdenzentralrohr (36) ringförmig angeordnet ist, zum Ausleiten des Brüden (36a) aus dem mindestens einen Verdampferraum (25) in den mindestens einen unteren Abscheidering (46) des mindestens einen als Zentrifugalabscheider wirkenden Tropfenabscheiders (38), der mindestens eine untere Abscheidering (46) des Weiteren umfassend - von innen nach außen gesehen - mindestens eine umlaufende innere Kammer (46a), mindestens einen vertikal angeordneten umlaufenden Siebring (46b) zum Auffangen noch vorhandener Tropfen und Feststoffteilchen und zum Durchtritt des Brüden (36a) in und durch mindestens eine umlaufende äußere Kammer (47c) und durch mindestens einen umlaufenden Siebring (47b) in mindestens eine innere Kammer (47a) des mindestens einen oberen Abscheiderings (47), der obere Abscheidering (47) des Weiteren umfassend mindestens einen Brüdenauslass (47d) für die Zuleitung zumindest eines Teils des gereinigten Brüden (36a) zu (i) dem mindestens einen Brüdenverdichter (27) zum Verdichten des gereinigten Brüden (36a) und zur Verdichtung und zur Rückführung des gereinigten Brüden (36a) in die mindestens eine saubere Primärseite des Umdampfers (32) als Antriebsenergie oder zur (ii) sauberen Primärseite mindestens eines weiteren, in Kaskade geschalteten Umdampfers (32a) gleicher und/oder unterschiedlicher Bauart sowie
mindestens einen Auslass (23) für das Stoffgemisch (SG8) am unteren Ende des mindestens einen Sammelraums (19), der mit der mindestens eine Fördervorrichtung (22) zur Förderung des Stoffgemischs (SG8) in den mindestens einen Fliehkraftabscheider (21) zur Auftrennung und Ausleitung des flüssigen Anteils (Flüssigdünger) und des festen Anteils (Feststoff) in Verbindung steht;
mindestens eine dem Gasabtrennzylinder (18) vorgeschaltete Fördervorrichtung (1) zum Fördern des mindestens eines Stroms mindestens eines Stoffgemischs (SG1) durch den mindestens einen Eingangswärmetauscher (3) zum Aufheizen des mindestens eines Stroms (SG1) zur Bildung des heißen Stroms (2) eines Stoffgemischs (SG2) durch mindestens ein heißes Kondensat (4) des Brüden (36a), wobei der mindestens eine Eingangsärmetauscher (3) mindestens einen Ablauf (5a) für mindestens ein abgekühltes Kondensat (5) des Brüden (36a) und mindestens einen Auslass (Abgas) für Dämpfe des Kondensats (5) des Brüden (36a) aufweist, und
mindestens eine Leitung (17) zum Befördern des mindestens einen in dem mindestens einen Flüssigkeitsauffangbehälter (18a) befindlichen vereinigten Stoffgemischs (SG3; SG4) in den mindestens einen am unteren Ende des mindestens einen vertikalen Umdampfers (32) mit kreisförmigem Querschnitt angeordneten Verteilerraum (32a).

2. Trennvorrichtung, SGTW, nach Anspruch 1, **dadurch gekennzeichnet, dass** der mindestens eine Umdampfer (32) als Naturumlaufverdampfer betreibbar ist.

3. Trennvorrichtung, SGTW, nach Anspruch 1 oder 2, **dadurch gekennzeichnet, dass** an der oberen kreisförmigen Kante des mindestens einen Rohrbündelwärmetauschers (35) ein umlaufendes, sich schräg nach unten öffnendes Abtropfblech angebracht ist.

4. Trennvorrichtung (SGTW) nach einem der Ansprüche 1 bis 3, **dadurch gekennzeichnet, dass** das mindestens eine Tropfenabprallblech (34), das mindestens eine Abtropfblech und/oder der Bereich der Austrittsöffnungen (35b) des mindestens einen Rohrbündelwärmetauschers (35) eine superhydrophile und/oder superhydrophobe Oberfläche hat oder haben.

5. Trennvorrichtung (SGTW) nach einem der Ansprüche 1 bis 4, **dadurch gekennzeichnet, dass** der mindestens eine Fliehkraftabscheider (9) und/oder der mindestens eine Fliehkraftabscheider (21) ein Hydrozyklon ist oder Hydrozyklone sind und dass die mindestens eine Fördervorrichtung (1) eine Förderpumpe und die mindestens eine Fördervorrichtung (6) ein Ejektor ist.

6. Trennvorrichtung (SGTW) nach einem der Ansprüche 1 bis 5, **dadurch gekennzeichnet, dass** bei einer Kaskadenschaltung der mindestens eine erste Umdampfer (32) auf seiner mindestens eine Primärseite mindestens einen Brüdeneingang (28) für die Zuleitung eines heißen Mediums einer Temperatur T3 und mindestens einen Brüdenaustritt (26) mit einer Zuführung für das austretende heiße Medium einer Temperatur T4 zu dem mindestens einen Brüdeneingang (28a) mindestens eines zweiten Umdampfers (32b) aufweist, der wiederum mindestens einen Brüdenaustritt (26a) mit einer Zuführung für das austretende heiße Medium einer Temperatur T5 zu dem mindestens einen Brüdeneingang (28n) mindestens eines n-ten Umdampfers (32n) mit mindestens einem Brüdenaustritt (26n) mit einer Zuführung für das austretende heiße Medium einer Temperatur Tn zu mindestens einem Wärmetauscher (45) eines Endverbrauchers der Energie (Wärme) aufweist, wobei der mindestens eine Wärmetauscher (45) mindestens einen Kondensatauslass (44) zu einer Sammelleitung (Wasser) aufweist, wobei die Variable n = eine ganze Zahl ≥3 und T3 > T4 > T5 > Tn und die Umdampfer (32), (32b) .... (32n) baugleich sind.

7. Trennverfahren zur kontinuierlichen oder diskontinuierlichen Trennung biogener, halbsynthetischer und/oder synthetischer Stoffgemische (SG1) in ihre festen, flüssigen und gasförmigen Anteile unter Wärmerückgewinnung mithilfe mindestens einer Trennvorrichtung gemäß einem der Ansprüche 1 bis 6, das Trennverfahren umfassend die folgenden Trennverfahrensschritte:
(A) Fördern mindestens eines Stroms (2) mindestens eines Stoffgemischs (SG1) mit mindestens einer Fördervorrichtung (1) durch mindestens einen Eingangswärmetauscher (3), Aufheizen des mindestens eines Stroms (SG1) und Bilden eines heißen Stroms eines Stoffgemischs (SG2) durch mindestens ein heißes Kondensat (4) eines Brüden (36a), wobei der mindestens eine Eingangswärmetauscher (3) mindestens einen Ablauf (5) für das mindestens eine abgekühlte Kondensat (5) und mindestens einen Auslass (Abgas) für Dämpfe des Kondensats (5) des Brüden (36a) aufweist,
(B) Fördern des mindestens einen heißen Stroms (SG2; 2) von dem mindestens einen Eingangswärmetauscher (3) in mindestens einen Fliehkraftabscheider (9) über mindestens eine Leitung mittels mindestens einer mit einem heißen Medium (Dampf) betriebenen Fördervorrichtung (6) und Aufschäumen des flüssigen und gasförmigen Anteils des mindestens einen heißen Stroms (SG2; 2) durch gezielte Änderung der Oberflächenspannung beim Eintritt und im Inneren mindestens einen Fliehkraftabscheiders (9) und Erzeugen eines Dichteunterschieds zwischen dem flüssigen und gasförmigen Anteil und dem festen Anteil des mindestens einen heißen Stoffgemischs (SG2), sodass die Dichte des festen Anteils > die Dichte des flüssigen und gasförmigen Anteils wird,
(C) Austragen des in dem mindestens einen Fliehkraftabscheider (9) abgetrennten Feststoffanteils (Feststoff) mit mindestens einer Vorrichtung (7),
(D) Förderung des abgetrennten, aufgeschäumten, flüssigen und gasförmigen Anteils (SG3) durch mindestens eine Leitung in den mindestens einen Flüssigkeitsauffangbehälter (18a) mindestens eines Gasabtrennzylinders (18) mit kreisförmigem Querschnitt, das Trennverfahren in dem mindestens einen Gasabtrennzylinder (18) umfassend:
(d1) Auskondensieren des flüssigen Anteils (SG4), in dem eine geringe Menge von gasförmigem Anteil gelöst ist, in mindestens einem oberhalb des mindestens einen Flüssigkeitsauffangbehälters (18a) fluchtend zu dem mindestens einen Gasabtrennzylinder (18) angeordneten ersten Wärmetauscher (10) mit einer Betriebstemperatur T1 und Rückführen von (SG4) in den Flüssigkeitsauffangbehälter (18a),
(d2) Umlenken der resultierenden mindestens einen aufsteigenden Lösung des gasförmigen Anteils in dem flüssigen Anteil (SG5) in mindestens einer oberhalb des mindestens einen ersten Wärmetauschers (10) fluchtend angeordneten Wendekammer (13), Eintreten des verbleibenden gasförmigen Anteils mit geringen Mengen an verbleibendem flüssigem Anteil (SG5) in den mindestens einen zweiten, fluchtend angeordneten Wärmetauscher (11) einer Betriebstemperatur T2 < T1 und Sammeln der mindestens einen resultierenden konzentrierten Lösung (SG6) des verbliebenen gasförmigen Anteils in mindestens einer unterhalb des mindestens einen zweiten Wärmetauschers (11) angeordneten mindestens einen Sammelkammer (1 1a) zur Verhinderung des Rücklaufs von (SG6) in den ersten Wärmetauscher (10) und zur Ausleitung der mindestens einen resultierenden konzentrierten Lösung (SG6) durch mindestens eine Auslaufvorrichtung (12) sowie
(d3) Ableiten der nicht kondensierten restlichen Gase aus mindestens einem am oberen Ende des mindestens einen Gasabtrennzylinders (18) angeordneten Abgasauslass (14),
(E) Befördern des mindestens einen in dem mindestens einen Flüssigkeitsauffangbehälter (18a) befindlichen vereinigten Stoffgemischs (SG3; SG4) über mindestens eine Leitung (17) zu mindestens einem am unteren Ende des mindestens einen vertikalen Umdampfers (32) mit kreisförmigem Querschnitt angeordneten Verteilerraum (32a), das Trennverfahren in dem mindestens einen Umdampfer (32) des Weiteren umfassend:
(e1) Dosieren mindestens eines Mittels in den mindestens einen Verteilerraum (32a) zur Bindung der verbliebenen gasförmigen Anteile des vereinigten Stoffgemischs (SG3; SG4) und Bilden eines von gasförmigen Anteilen befreiten Stoffgemischs (SG7), (e2) Erhitzen des vertikal nach oben strömenden Stoffgemischs (SG7) in mindestens einem Rohrbündelwärmetauscher (35) mit konzentrisch angeordneten Wärmetauscherrohren (35a), wobei (35) mit über mindestens ein Brüdenzentralrohr (36) zurückgeleitetem heißem Brüden (36a) betrieben wird,
(e3) Erwärmen des mindestens einen Stoffgemischs (SG1) mit dem Brüden (36a), der über das mindestens eine das mindestens eine Brüdenzentralrohr (36) konzentrisch umgebende Brüdenrohr (29) aus dem Umdampfer (32) durch mindestens einen Brüdenauslass (28) ausgeleitet und zur Primärseite des mindestens einen Eingangswärmetauschers (3) transportiert wird,
(e4) Ausleiten des erhitzten flüssigen Stoffgemischs (SG7) aus den Austrittsöffnungen (35b) am oberen Ende des mindestens einen Rohrbündelwärmetauschers (35) in mindestens einen Verdampferraum (25) mindestens eines den mindestens einen Rohrbündelwärmetauscher (35) konzentrisch umhüllenden Außenbehälters (24) und Abtrennen des Brüden (36a) und Sammeln des resultierenden flüssigen Stoffgemischs (SG8) in dem mindestens einen Sammelraum (19),
(e5) Sammeln von spritzenden Schäumen und Tropfen mit mindestens einem oberhalb der Austrittsöffnungen (35b) und des mindestens einen Verdampferraums (25) angeordneten Tropfenabprallblech (34) in der Form einer sich nach unten öffnenden Mantelfläche eines flachen Kegelstumpfs,
(e6) Ausleiten des Brüden (36a) aus dem mindestens einen Verdampferraum (25) in den mindestens einen unteren Abscheidering (46) mindestens eines als Zentrifugalabscheider wirkenden Tropfenabscheiders (38) über mindestens einen Brüdenaustrittsstutzen (26), der um das mindestens eine Brüdenrohr (36b) ringförmig angeordnet ist, wobei der Brüden (36a) in dem mindestens einen unteren Abscheidering (46) - von innen nach außen gesehen - in die mindestens eine umlaufende innere Kammer (46a), durch den mindestens einen vertikal angeordneten umlaufenden Siebring (46b) zum Auffangen noch vorhandener Tropfen und Feststoffteilchen und in die mindestens eine umlaufende äußere Kammer (47c) eintritt und diese durchläuft und durch mindestens einen umlaufenden Siebring (47b) in die mindestens eine umlaufende innere Kammer (47a) des mindestens einen oberen Abscheiderings (47) eintritt, wo der gereinigte Brüden (36a) durch mindestens einen Brüdenauslass (47d) zumindest teilweise (i) zu mindestens einem Brüdenverdichter (27) zum Verdichten des gereinigten Brüden (36a) und zur Verdichtung und zur Rückführung des gereinigten Brüden (36a) in die mindestens eine saubere Primärseite des Umdampfers (32) als Antriebsenergie oder zur (ii) sauberen Primärseite mindestens eines weiteren, in Kaskade geschalteten Umdampfers (32a) gleicher oder unterschiedlicher Bauweise geleitet wird sowie
(e7) Ausleiten des Stoffgemischs (SG8) durch mindestens einen Auslass (23) am unteren Ende des mindestens einen Sammelraums (19) und Fördern von (SG8) mit mindestens einer Fördervorrichtung (22) in mindestens einen Fliehkraftabscheider (21) und Auftrennen und Ausleiten des separierten flüssigen Anteils (Flüssigdünger) und separierten des festen Anteils (Feststoff).

8. Trennverfahren nach Anspruch 7, **dadurch gekennzeichnet, dass** der mindestens eine Umdampfer (32) als Naturumlaufverdampfer betrieben wird.

9. Trennverfahren nach einem der Ansprüche 7 und 8, **dadurch gekennzeichnet, dass** das heiße Medium die stoffliche Zusammensetzung des Brüden (36a) hat.

10. Trennverfahren nach einem der Ansprüche 7 bis 9 **dadurch gekennzeichnet, dass** die biogenen, halbsynthetischen und/oder synthetischen Stoffgemische (SG1; SG2; SG3; SG4; SG5; SG6; SG7; SG8) und ihre festen, flüssigen und gasförmigen Inhaltsstoffe, aus der Gruppe, bestehend aus
- Abfallprodukten, ausgewählt aus der Gruppe, bestehend aus Gülle, Jauche, Fäkalien, Gärresten, Fermenten, Klärschlämmen, Wasser aus Nachklärbecken, Konzentraten der biologischen Reinigungsstufen und Rückständen von chemischen Wäschern, mikrobiologischen Reaktoren, gentechnologischen Anlagen, Filtern und Elektrofiltern und Rückständen aus der Abluftbehandlung und aus Klimaanlagen,
- Aufschlämmungen und Kulturen von Mikroorganismen und Zellen sowie Aufschlämmungen von zerkleinerten Pilzen, Pflanzen, Pflanzenresten, toten Tieren und Tierresten,
- nativen Biopolymeren, ausgewählt aus der Gruppe, bestehend aus Proteinen und Peptiden, Nukleinsäuren, alpha-Polysacchariden, beta-Polysacchariden, Lipiden, Polyhydroxyalkanoaten, Cutin, Suberin, Polylactiden, Polyhydroxybutyraten, thermoplastische Stärken, Thermoplasten auf Ligninbasis und Epoxyacrylaten auf der Basis von natürlichen Ölen,
- Wachsen, ausgewählt aus der Gruppe, bestehend aus Candelillawachs, Carnaubawachs, Japanwachs, Espartograswachs, Korkwachs, Guarumawachs, Reiskeimölwachs, Zuckerrohrwachs, Ouricurywachs, Montanwachs, absolute Blütenwachsen, Kuba-Palmenwachs, Baumwollwachs, Flachswachs, Torfwachs, Rosenwachs, Jasminwachs, Peethawachs, Myrtewachs, Wachsfeigenwachs, Walrat, Wollwachs, Schellack, Chinawachs, Bienenwachs, Bürzeldrüsenwachs, Ceresin, Ozokerit, Hartwachsen, Montanesterwachsen, Sasolwachsen, hydrierten Jojobawachsen, Wollwachsalkoholen (Eucerit) und modifizierte Bienenwachsen (Cerabellina),
- Körperflüssigkeiten, ausgewählt aus der Gruppe, bestehend aus Blut, Lymphe, Speichel, Magensaft, Sekretion des Pankreas, Galle, Urin, Schweiß, Muttermilch, Vaginalsekret, Tränenflüssigkeit, Nasensekret, Ejakulat, Menstruationsflüssigkeit, Surfactant,, Wasser des Auges, Hirnwasser, Aszites, Pleuraflüssigkeit, Pericardflüssigkeit, Gelenksflüssigkeit, Fruchtwasser und Ohrenschmalz,
- Feststoff-Flüssigkeit-Gas-Gemischen aus Erdölquellen, Erdgasquellen, Erzbergwerken, Kohlebergwerken und chemischen Reaktoren,
- anorganischen und organischen, niedermolekularen, oligomeren und hochmolekularen Feststoffen,
- anorganischen und organischen Lösemitteln,
- anorganischen und organischen Gasen und
- Lebensmitteln, Getränken und Lebensmittelvorprodukten.
ausgewählt sind, insbesondere dass das Stoffgemisch (SG1) aus der Gruppe, bestehend aus Gülle, Jauche und Gärresten, ausgewählt wird, die
- als Feststoffanteile Pflanzenteile, Proteine und Peptide, Nukleinsäuren, alpha-Polysaccharide, beta-Polysaccharide, Lipide, Fermente, Enzyme, Mikroorganismen, Zucker, Zuckeralkohole, Zuckersäuren und Salze wie Kaliumnitrat, Natriumnitrit, Calciumhydrogenphosphat und Magnesiumsulfat gelöst oder dispergiert enthalten,
- als flüssige Anteile Wasser und nichtflüchtige organische Amine und
- als Gase Ammoniak und flüchtige primäre, sekundäre und tertiäre organische Amine
enthalten, insbesondere **dass**
- die Temperatur T1 = 30 °C bis 60 °C,
- die Temperatur T2 = 10 °C bis 40 °C,
- die Temperatur T3 = 90 °C bis 110 °C und
- die Temperatur T4 = 80°C bis 100 °C
- die Temperatur T5 = 70 °C bis 90 °C
beträgt und die Differenzen T3 - T4 und T4 - T5 jeweils 5 °C bis 15 °C betragen und die Differenz T5 - Tn = (n x 5) °C bis (n x 15) °C.

11. Trennverfahren nach einem der Ansprüche 7 bis 10, **dadurch gekennzeichnet, dass** das Stoffgemisch (SG2) im Trennverfahrensschritt (B) durch mechanische Einwirkung, Verwirbelung und/oder durch Schall aufgeschäumt wird, insbesondere **dass** einem stark schäumenden Stoffgemisch (SG2) zur Änderung der Oberflächenspannung mindestens ein Entschäumer zur Unterdrückung einer zu intensiven Schaumbildung und einem nur schwach schäumenden Stoffgemisch (SG2) zur Änderung der Oberflächenspannung mindestens ein Tensid zugesetzt wird, um die Schaumbildung zu intensivieren, insbesondere **dass** dem abgetrennten, aufgeschäumten, flüssigen und gasförmigen Anteil (SG3) zur besseren Verarbeitung im Trennverfahrensschritt (D) mindestens ein Entschäumer zur Erhöhung der Oberflächenspannung zugesetzt wird.

12. Trennverfahren nach einem der Ansprüche 10 bis 11, **dadurch gekennzeichnet, dass** in dem vereinigten Stoffgemisch (SG3; SG4) in dem mindestens einen Verteilerraum (32a) restlicher Ammoniak und restliche organische Amine mit Schwefelsäure und/oder ortho-Phosphorsäure gebunden werden.

13. Trennverfahren nach einem der Ansprüche 7 bis 12, **dadurch gekennzeichnet, dass** die in den Trennverfahrensschritten (D) und (E) abgetrennten Feststoffanteile (Feststoff) in einer Mühle mechanochemisch zu elementarem Kohlenstoff verarbeitet werden und/oder den biogenen, halbsynthetischen und/oder synthetischen Stoffgemischen (SG1; SG2; SG3; SG4; SG5; SG6; SG7; SG8) und/oder ihren festen und flüssigen Inhaltsstoffen Feststoffe zur Oberflächenvergrößerung und/oder Dekontamination zugesetzt werden, insbesondere **dass** die Feststoffe aus der Gruppe, bestehend aus Aktivkohlen, Biokohlen, Kohlenstoffnanoröhrchen, Kohlenstoffnanofasern, natürlichen, halbsynthetischen und synthetischen Fasern, Mikrocellulose, Nanocellulose, Hohlfasern, Aerogelen, Schichtsilikaten, Silikaten, Sanden und mesoporen Materialien, ausgewählt werden.

14. Verwendung der Trennvorrichtung gemäß einem der Ansprüche 1 bis 6 und des Trennverfahrens gemäß einem der Ansprüche 7 bis 13 in der Landwirtschaft, der Forstwirtschaft und dem Gartenbau, zur Trennung azeotroper Gemische, zur Trinkwassergewinnung und Trinkwasserentsalzung, zur Herstellung von ultrareinem Wasser, zur Meerwasserentsalzung, zum Entgipsen von Grundwasser, für Sulfattrennungen, zur Aufbereitung von Brackwasser, zur Dekontamination von Wasser durch Öle, Schwermetalle und persistente organische Schadstoffe, zur Dekontamination von Stoffgemischen mit Aktivkohle im Kreislaufverfahren, zur Abtrennung, Fraktionierung und Rückgewinnung von flüchtigen organischen Verbindungen und Dämpfen, als Alternative zur Destillation und Rektifikation, zur Abtrennung von kolloidalen Oxiden und Hydroxiden, Erzen, Kohlen, Mikropartikeln, Mikroorganismen, Trübstoffen, Sedimenten und Sanden, zur Metallrückgewinnung zur Trennung von Öl-Wasser-Emulsionen, zur Entwässerung von Latices, zur Gewinnung von Chlor, zum Ernten von Zellen in der Biotechnologie, zur Abtrennung von Eiweißen, Enzymen und Antibiotika in der Biotechnologie, zur Produktion von Antibiotika, zur Trocknung und Bildung von Nanosphären, Mikrosphären und Micellen, als Ersatz von und zur Kombination mit Mikrofiltration, Ultrafiltration, Nanofiltration und Umkehrosmose, Alternative zu oder Kombination mit Sedimentationsbecken, zum Einengen bei großtechnischen Prozessen, zur Unterstützung von und zur Kombination mit dem Lösung-Diffusionsmodell oder dem hydrodynamischen Modell der Membrantrennung, zum Ersatz und zur Unterstützung der Pervaporation, als Ersatz und Alternative zu Dialysen allgemein, in der Humanmedizin und Tiermedizin, in künstlichen Lungen und zur Blutwäsche, zur Eindickung von Säften, zur Milchtrocknung, zur Zuckerraffination, zur Reinigung von Biervorstufen und Brauereiprodukten, zur Auftrennung von Fett und Proteinanteilen bei der Erzeugung von Nahrungsmittelzusatzstoffen, zur Herstellung von Dispersionen Emulsionen, die die Ostwaldreifung verzögern oder verhindern, zur Herstellung von kondensierten Brüden in der Qualität von destilliertem Wasser zu Zwecken der Desinfizierung und Reinigung von Viehställen und zur Wiederaufbereitung von Ammoniak aus dem Waschwasser von Ammoniakwäschern.

## Claims

1. Separating device SGTW constructed from thermally, mechanically and anticorrosion-stable materials for the continuous or discontinuous separation of biogenic, semisynthetic and/or synthetic substance mixtures (SG1) into their solid, liquid and gaseous fractions while recovering heat, the separating device SGTW comprising:
at least one gas separating cylinder (18) constructed from thermally, mechanically and chemically stable and anticorrosion-stable materials with a circular cross section for the separation of gaseous fractions of biogenic, semisynthetic and/or synthetic substance mixtures (SG1), the at least one gas separating cylinder (18) comprising at least one liquid capture container (18a);
at least one line for delivering at least one hot flow (SG2; 2) of at least one semisynthetic and/or synthetic substance mixture (SG1) into at least one cyclone separator (9) by means of at least one delivery device (6) operated with a hot medium (steam) in order to foam the liquid or liquid and gaseous fraction of the at least one hot flow (SG2; 2) by modifying the surface tension upon entry and in the interior of the at least one cyclone separator (9) in order to generate a density difference between the liquid fraction and the solid fraction of the at least one hot substance mixture (SG2; 2), so that the density of the solid fraction > the density of the liquid and gaseous fraction, at least one device (7) for extracting the solid fraction (solid) separated in the at least one cyclone separator (9),
at least one line for delivering the separated, foamed, liquid and gaseous fraction (SG3),
at least one line for delivering the separated, foamed, liquid and gaseous fraction (SG3) into the at least one liquid capture container (18a) of the at least one gas separating cylinder (18), the at least one gas separating cylinder (18) comprising:
at least one first heat exchanger (10) arranged above the at least one liquid capture container (18a), flush with at least one gas separating cylinder (18), having an operating temperature T1 for condensing and returning a condensed liquid fraction (SG4), in which a small amount of gaseous fraction is dissolved, into the at least one liquid capture container (18a),
at least one second heat exchanger (11) arranged flush, having an operating temperature T2 < T1,
at least one collection chamber (11a) arranged below the at least one second heat exchanger (11),
at least one discharge device (12),
at least one turning chamber (13) arranged flush above the at least one first heat exchanger (10) for diverting the remaining gaseous fraction with small amounts of remaining liquid fraction (SG5) to the entry into the at least one second heat exchanger (11) having an operating temperature T2 < T1 in order to condense at least one solution of the gaseous fraction in a liquid fraction (SG6) and to collect the liquid fraction (SG6) in the at least one collection chamber (11a) arranged below the at least one second heat exchanger (11) in order to prevent reflux and to channel (SG6) through the at least one discharge device (12), and
(iv3) at least one off-gas outlet (14) arranged at the upper end of the at least one gas separating cylinder (18) in order to channel off the uncondensed residual gases (off-gases);
at least one droplet separator (38) acting as a centrifugal separator,
at least one vapour compressor (27),
at least one delivery device (22),
at least one cyclone separator (21),
at least one vertical distiller (32) constructed from thermally, mechanically and chemically stable and anticorrosion-stable materials downstream of the gas separating cylinder (18) with a circular cross section for producing purified vapour (36a), the distiller (32) comprising the following components:
at least one distributor space (32a) arranged at the lower end of the at least one vertical distiller (32) with a circular cross section, containing a substance mixture (SG3; SG4) of gaseous fractions and solid fractions in a low concentration in at least one liquid fraction,
at least one device for metering at least one agent into the at least one distributor space (32a) in order to bind the remaining gaseous fractions of the substance mixture (SG3; SG4) and to form a substance mixture freed from gaseous fractions (SG7),
at least one tube bundle heat exchanger (35) with concentrically arranged heat exchanger tubes (35a) for heating the substance mixture (SG7) flowing vertically upwards, the tube bundle heat exchanger (35) being operable with hot vapour (36a) fed back via at least one vapour central tube (36),
at least one outer container (24) concentrically enclosing the at least one tube bundle heat exchanger (35) with at least one evaporator space (25) and at least one collection space (19),
at least one vapour outlet (28),
at least one vapour tube (29) concentrically surrounding the at least one vapour central tube (36) in order to channel the vapour (36a) out of the distiller (32) through the at least one vapour outlet (28) for use as a heat source,
exit openings (35b) at the upper end of the at least one tube bundle heat exchanger (35) for channelling the heated liquid substance mixture (SG7) out into the at least one evaporator space (25) of the at least one outer container (24) concentrically enclosing the at least one tube bundle heat exchanger (35) in order to separate the vapour (36a) and collect the resulting liquid substance mixture (SG8) in the at least one collection space (19),
at least one droplet rebound plate (34) arranged above the exit openings (35b) and the at least one evaporator space (25) in the form of a downwardly open lateral surface of a shallow conical frustum,
at least one lower separating ring (46) of at least one droplet separator (38) acting as a centrifugal separator and at least one upper separating ring (47),
at least one vapour exit port (26), which is arranged annularly around the at least one vapour central tube (36), for channelling the vapour (36a) out of the at least one evaporator space (25) into the at least one lower separating ring (46) of the at least one droplet separator (38) acting as a centrifugal separator, the at least one lower separating ring (46) furthermore comprising - as seen from the inside outwards - at least one circumferential inner chamber (46a), at least one vertically arranged circumferential screening ring (46b) for trapping still present droplets and solid particles and for passing the vapour (36a) into and through at least one circumferential outer chamber (47c) and through at least one circumferential screening ring (47b) into at least one inner chamber (47a) of the at least one upper separating ring (47), the upper separating ring (47) furthermore comprising at least one vapour outlet (47d) for supplying at least a part of the purified vapour (36a) to (i) the at least one vapour compressor (27) for compressing the purified vapour (36a) and for compression and return of the purified vapour (36a) into the at least one clean primary side of the distiller (32) as operating energy or to (ii) the clean primary side of at least one further distiller (32a), connected in cascade, of the same and/or different design, and
at least one outlet (23) for the substance mixture (SG8) at the lower end of the at least one collection space (19), which is in connection with the at least one delivery device (22) for delivering the substance mixture (SG8) into the at least one cyclone separator (21) for separating and channelling out the liquid fraction (liquid fertiliser) and the solid fraction (solid);
at least one delivery device (1), upstream of the gas separating cylinder (18), for delivering the at least one flow of at least one substance mixture (SG1) through the at least one input heat exchanger (3) in order to heat the at least one flow (SG1) in order to form the hot flow (2) of a substance mixture (SG2) through at least one hot condensate (4) of the vapour (36a), the at least one input heat exchanger (3) having at least one outflow (5a) for at least one cooled condensate (5) of the vapour (36a) and at least one outlet (off-gas) for fumes of the condensate (5) of the vapour (36a), and
at least one line (17) for conveying the at least one purified substance mixture (SG3; SG4) located in the at least one liquid collection container (18a) into the at least one distributor space (32a) arranged at the lower end of the at least one vertical distiller (32) with a circular cross section.

2. Separating device SGTW according to Claim 1, **characterized in that** the at least one distiller (32) can be operated as a natural convection evaporator.

3. Separating device SGTW according to Claim 1 or 2, **characterized in that** a circumferential drip plate open obliquely downwards is attached to the upper circular edge of the at least one tube bundle heat exchanger (35).

4. Separating device (SGTW) according to one of Claims 1 to 3, **characterized in that** the at least one droplet rebound plate (34), the at least one drip plate and/or the region of the exit openings (35b) of the at least one tube bundle heat exchanger (35) has or have a superhydrophilic and/or superhydrophobic surface.

5. Separating device (SGTW) according to one of Claims 1 to 4, **characterized in that** the at least one cyclone separator (9) and/or the at least one cyclone separator (21) is a hydrocyclone or are hydrocyclones, and **in that** the at least one delivery device (1) is a delivery pump and the at least one delivery device (6) is an ejector.

6. Separating device (SGTW) according to one of Claims 1 to 5, **characterized in that**, in the case of a cascade circuit, the at least one first distiller (32) has on its at least one primary side at least one vapour input (28) for supplying a hot medium at a temperature T3 and at least one vapour exit (26) with a feed for the emerging hot medium at a temperature T4 to the at least one vapour input (28a) of at least one second distiller (32b), which in turn has at least one vapour exit (26a) with a feed for the emerging hot medium at a temperature T5 to the at least one vapour input (28n) of at least one n^{th} distiller (32n) having at least one vapour exit (26n) with a feed for the emerging hot medium at a temperature Tn to at least one heat exchanger (45) of an end consumer of the energy (heat), the at least one heat exchanger (45) having at least one condensate outlet (44) to a collection line (water), wherein the variable n = an integer ≥ 3 and T3 > T4 > T5 > Tn and the distillers (32), (32b) .... (32n) are identical.

7. Separating method for the continuous or discontinuous separation of biogenic, semisynthetic and/or synthetic substance mixtures (SG1) into their solid, liquid and gaseous fractions while recovering heat with the aid of at least one separating device according to one of Claims 1 to 6, the separating method comprising the following separating method steps:
(A) delivering at least one flow (2) of at least one substance mixture (SG1) with at least one delivery device (1) through at least one input heat exchanger (3), heating the at least one flow (SG1) and forming a hot flow of a substance mixture (SG2) through at least one hot condensate (4) of a vapour (36a), the at least one input heat exchanger (3) having at least one outflow (5) for the at least one cooled condensate (5) and at least one outlet (off-gas) for fumes of the condensate (5) of the vapour (36a),
(B) delivering the at least one hot flow (SG2; 2) from the at least one input heat exchanger (3) into at least one cyclone separator (9) via at least one line by means of a delivery device (6) operated with a hot medium (steam) and foaming the liquid and gaseous fraction of the at least one hot flow (SG2; 2) by purposely modifying the surface tension upon entry and in the interior of at least one cyclone separator (9) and generating a density difference between the liquid and gaseous fraction and the solid fraction of the at least one hot substance mixture (SG2; 2), so that the density of the solid fraction > the density of the liquid and gaseous fraction,
(C) extracting the solid fraction (solid) separated in the at least one cyclone separator (9) with at least one device (7),
(D) delivering the separated, foamed, liquid and gaseous fraction (SG3) through at least one line into the at least one liquid capture container (18a) of at least one gas separating cylinder (18) with a circular cross section, the separating method comprising in the at least one gas separating cylinder (18):
(d1) condensing the liquid fraction (SG4), in which a small amount of gaseous fraction is dissolved, in at least one first heat exchanger (10), arranged above the at least one liquid capture container (18a) flush with the at least one gas separating cylinder (18), having an operating temperature T1 and returning (SG4) into the liquid capture container (18a),
(d2) diverting the resulting at least one ascending solution of the gaseous fraction in the liquid fraction (SG5) in at least one turning chamber (13) arranged flush above the at least one first heat exchanger (10), introducing the remaining gaseous fraction with small amounts of remaining liquid fraction (SG5) into the at least one second heat exchanger (11) arranged flush with an operating temperature T2 < T1, and collecting the at least one resulting concentrated solution (SG6) of the remaining gaseous fraction in at least one at least one collection chamber (11a) arranged below the at least one second heat exchanger (11) in order to prevent reflux of (SG6) into the first heat exchanger (10) and to channel the at least one resulting concentrated solution (SG6) through at least one discharge device (12), and
(d3) channelling off the uncondensed residual gases from at least one off-gas outlet (14) arranged at the upper end of the at least one gas separating cylinder (18),
(E) delivering the at least one purified substance mixture (SG3; SG4) located in the at least one liquid collection container (18a) via at least one line (17) to at least one distributor space (32a) arranged at the lower end of the at least one vertical distiller (32) with a circular cross section, the separating method furthermore comprising in the at least one distiller (32):
(e1) metering at least one agent into the at least one distributor space (32a) in order to bind the remaining gaseous fractions of the purified substance mixture (SG3; SG4) and to form a substance mixture freed from gaseous fractions (SG7),
(e2) heating the upwardly flowing substance mixture (SG7) in at least one tube bundle heat exchanger (35) with concentrically arranged heat exchanger tubes (35a), (35) being operable with hot vapour (36a) fed back via at least one vapour central tube (36),
(e3) heating the at least one substance mixture (SG1) with the vapour (36a), which is channelled out of the distiller (32) via the at least one vapour tube (29) concentrically surrounding the at least one vapour central tube (36) through the at least one vapour outlet (28) and is transported to the primary side of the at least one input heat exchanger (3),
(e4) channelling the heated liquid substance mixture (SG7) out from the exit openings (35b) at the upper end of the at least one tube bundle heat exchanger (35) into at least one evaporator space (25) of at least one outer container (24) concentrically enclosing the at least one tube bundle heat exchanger (35) and separating the vapour (36a) and collecting the resulting liquid substance mixture (SG8) in the at least one collection space (19),
(e5) collecting splashing foams and droplets with at least one droplet rebound plate (34) arranged above the exit openings (35b) and the at least one evaporator space (25) in the form of a downwardly open lateral surface of a shallow conical frustum,
(e6) channelling the vapour (36a) out of the at least one evaporator space (25) into the at least one lower separating ring (46) of at least one droplet separator (38) acting as a centrifugal separator via at least one vapour exit port (26), which is arranged annularly around the at least one vapour tube (36b), the vapour (36a) in the at least one lower separating ring (46) - as seen from the inside outwards - entering into the at least one circumferential inner chamber (46a) through the at least one vertically arranged circumferential screening ring (46b) for trapping still present droplets and solid particles and into the at least one circumferential outer chamber (47c), and passing through the latter, and entering through at least one circumferential screening ring (47b) into the at least one circumferential inner chamber (47a) of the at least one upper separating ring (47), where the purified vapour (36a) is fed through at least one vapour outlet (47d) at least partially (i) to at least one vapour compressor (27) for compressing the purified vapour (36a) and for compression and return of the purified vapour (36a) into the at least one clean primary side of the distiller (32) as operating energy or to (ii) the clean primary side of at least one further distiller (32a), connected in cascade, of the same or different design, and
(e7) channelling the substance mixture (SG8) through at least one outlet (23) at the lower end of the at least one collection space (19) and delivering (SG8) with at least one delivery device (22) into at least one cyclone separator (21) and separating and channelling out the separated liquid fraction (liquid fertiliser) and separating the solid fraction (solid).

8. Separating method according to Claim 7, **characterized in that** the at least one distiller (32) can be operated as a natural convection evaporator.

9. Separating method according to one of Claims 7 and 8, **characterized in that** the hot medium has the material composition of the vapour (36a).

10. Separating method according to one of Claims 7 to 9, **characterized in that** the biogenic, semisynthetic and/or synthetic substance mixtures (SG1; SG2; SG3; SG4; SG5; SG6; SG7; SG8) and their solid, liquid and gaseous constituents are selected from the group consisting of
- waste products selected from the group consisting of liquid manure, slurry, faecal matter, digestive residues, ferments, sewage sludge, water from secondary settling tanks, concentrates of biological treatment processes and residues of chemical scrubbers, microbiological reactors, genetic engineering installations, filters and electrofilters and residues from discharged air treatment and air conditioners,
- slurries and cultures of microorganisms and cells as well as slurries of comminuted fungi, plants, plant remains, dead animals and animal remains,
- native biopolymers selected from the group consisting of proteins and peptides, nucleic acids, alpha-polysaccharides, beta-polysaccharides, lipids, polyhydroxyalkanoates, cutin, suberin, polylactides, polyhydroxybutyrates, thermoplastic starches, thermoplastics based on lignin and epoxyacrylates based on natural oils,
- waxes selected from the group consisting of candelilla wax, carnauba wax, Japan wax, esparto wax, cork wax, guaruma wax, rice bran wax, sugarcane wax, ouricury wax, montan wax, floral absolute waxes, Cuban palm wax, cotton wax, flax wax, peat wax, rose wax, jasmin wax, peetha wax, myrtle wax, wax fig wax, spermaceti, wool wax, shellac, Chinese wax, beeswax, preen-gland wax, ceresin, ozokerite, hard waxes, montanic acid ester waxes, Sasol waxes, hydrogenated jojoba waxes, wool wax alcohols (Eucerit) and modified beeswaxes (cera bellina) .
- body fluids selected from the group consisting of blood, lymph, saliva, gastric juice, pancreatic secretion, bile, urine, sweat, breastmilk, vaginal secretion, tear fluid, nasal secretion, ejaculate, menstrual fluid, surfactant, aqueous humour, cerebrospinal fluid, ascites, pleural fluid, pericardial fluid, synovial fluid, amniotic fluid and cerumen,
- solid-liquid-gas mixtures from oil wells, natural gas wells, ore mines, coal mines and chemical reactors,
- inorganic and organic, low molecular weight, oligomeric, high molecular weight solids,
- inorganic and organic solvents,
- inorganic and organic gases and
- foodstuffs, beverages and intermediate food products,
particularly **in that** the substance mixture (SG1) is selected from the group consisting of liquid manure, slurry and digestive residues which contain
- as solid fractions plant parts, proteins and peptides, nucleic acids, alpha-polysaccharides, beta-polysaccharides, lipids, ferments, enzymes, microorganisms, sugars, sugar alcohols, sugar acids and salts such as potassium nitrite, sodium nitrite, calcium hydrogen phosphate and magnesium sulfate dissolved or dispersed,
- as liquid fractions water and nonvolatile organic amines and
- as gases ammonia and volatile primary, secondary and tertiary organic amines,
particularly **in that**
- the temperature T1 = 30°C to 60°C,
- the temperature T2 = 10°C to 40°C,
- the temperature T3 = 90°C to 110°C and
- the temperature T4 = 80°C to 100°C
- the temperature T5 = 70°C to 90°C
and the differences T3 - T4 and T4 - T5 are each from 5°C to 15°C and the difference T5 - Tn = (n x 5)°C to (n x 15)°C.

11. Separating method according to one of Claims 7 to 10, **characterized in that** the substance mixture (SG2) is foamed in separating method step (B) by mechanical action, vortexing and/or by sound, particularly **in that** in order to modify the surface tension at least one antifoaming agent for suppressing excessive foam formation is added to a strongly foaming substance mixture (SG2) and in order to modify the surface tension at least one surfactant for intensifying the foam formation is added to an only weakly foaming substance mixture (SG2), particularly **in that** at least one antifoaming agent for increasing the surface tension is added to the separated, foamed, liquid and gaseous fraction (SG3) for better processing in separating method step (D).

12. Separating method according to one of Claims 10 to 11, **characterized in that** residual ammonia and residual organic amines are bound with sulfuric acid and/or orthophosphoric acid in the purified substance mixture (SG3; SG4) in the at least one distributor space (32a).

13. Separating method according to one of Claims 7 to 12, **characterized in that** the solid fractions (solid) separated in separating method steps (D) and (E) are mechanochemically processed into elemental carbon in a mill and/or are added to the biogenic, semisynthetic and/or synthetic substance mixtures (SG1; SG2; SG3; SG4; SG5; SG6; SG7; SG8) and/or their solid and liquid constituents solids to increase the surface area and/or for decontamination, particularly **in that** the solids are selected from the group consisting of activated carbons, biocarbons, carbon nanotubes, carbon nanofibres, natural, semisynthetic and synthetic fibres, microcelluloses, nanocelluloses, hollow fibres, aerogels, phyllosilicates, silicates, sands and mesoporous materials.

14. Use of the separating device according to one of Claims 1 to 6 and of the separating method according to one of Claims 7 to 13 in agriculture, forestry and horticulture, for the separation of azeotropic mixtures, for drinking water production and drinking water demineralisation, for the production of ultrapure water, for seawater desalination, for the removal of gypsum from groundwater, for sulfate separations, for the treatment of brackish water, for the decontamination of water due to oils, heavy metals and persistent organic pollutants, for the decontamination of substance mixtures with activated carbon in recycling procedures, for the separation, fractionation and recovery of volatile organic compounds and fumes, as an alternative to distillation and rectifying, for the separation of colloidal oxides and hydroxides, ores, coals, microparticles, microorganisms, solids that cause turbidity, sediments and sands, for metal recovery, for the separation of oil-water emulsions, for the dehydration of latices, for the production of chlorine, for the harvesting of cells in biotechnology, for the separation of proteins, enzymes and antibiotics in biotechnology, for the production of antibiotics, for the drying and formation of nanospheres, microspheres and micelles, as a replacement of and combination with microfiltration, ultrafiltration, nanofiltration and reverse osmosis, as an alternative to or combination with sedimentation tanks, for concentration by evaporation in large-scale industrial processes, for the assistance of and for combination with the solution-diffusion model or the hydrodynamic model of membrane separation, for the replacement and assistance of pervaporation, as a replacement and alternative to dialysis in general, in human medicine and veterinary medicine, in artificial lungs and for haemodialysis, for the thickening of juices, for the drying of milk, for sugar refining, for the purification of beer precursors and brewery products, for the separation of fat and protein fractions in the manufacture of food additives, for the production of dispersions, emulsions that delay or prevent Ostwald ripening, for the production of condensed vapours with the quality of distilled water for purposes of disinfection and cleaning in cowsheds and for the reprocessing of ammonia from the washing water of ammonia scrubbers.

## Revendications

1. Dispositif de séparation SGTW constitué de matériaux stables thermiquement, mécaniquement et vis-à-vis de la corrosion, pour la séparation continue ou discontinue de mélanges de matières (SG1) biogènes, semi-synthétiques et/ou synthétiques en leurs parties solides, liquides ou gazeuses, avec récupération de chaleur, le dispositif de séparation SGTW comprenant :
au moins un cylindre séparateur de gaz (18), constitué de matériaux thermiquement, mécaniquement et chimiquement stables et stables vis-à-vis de la corrosion, ayant une section transversale circulaire, pour séparer les parties gazeuses de mélanges de substances (SG1) biogènes, semi-synthétiques et/ou synthétiques, l'au moins un cylindre séparateur de gaz (18) comprenant au moins un réservoir de stockage de liquide (18a) ;
au moins une conduite pour refouler au moins un courant chaud (SG2 ; 2) d'au moins un mélange de substances (SG1) semi-synthétique et/ou synthétique dans au moins un cyclone (9) à l'aide d'au moins un dispositif de refoulement (6), exploité avec un fluide chaud (vapeur), pour expanser la partie liquide, ou liquide et gazeuse, de l'au moins un courant chaud (SG2 ; 2) sous l'effet de la modification de la tension superficielle à l'entrée et à l'intérieur de l'au moins un cyclone (9), pour produire une différence de densité entre la partie liquide et la partie solide de l'au moins un mélange de substances chaud (SG2 ; 2), de façon que la densité de la partie solide soit supérieure à la densité de la partie liquide et gazeuse,
au moins un dispositif (7) pour évacuer la partie solide (matière solide) séparée dans l'au moins un cyclone (9),
au moins une conduite pour refouler la partie liquide et gazeuse (SG3) séparée, expansée,
au moins une conduite pour refouler la partie liquide et gazeuse (SG3) séparée, expansée, dans l'au moins un réservoir de stockage de liquide (18a) de l'au moins un cylindre séparateur de gaz (18), l'au moins un cylindre séparateur de gaz (18) comprenant :
au moins un premier échangeur de chaleur (10), disposé au-dessus de l'au moins un réservoir de stockage de liquide (18a) en alignement avec au moins un cylindre séparateur de gaz (18), ayant une température de marche T1, pour condenser et renvoyer la partie liquide condensée (SG4), dans laquelle une faible quantité de la partie gazeuse est dissoute, dans l'au moins un réservoir de stockage de liquide (18a),
au moins un deuxième échangeur de chaleur (11), disposé en alignement, ayant une température de marche T2 < T1,
au moins une chambre collectrice (11a) disposée en dessous de l'au moins un deuxième échangeur de chaleur (11),
au moins un dispositif de sortie (12),
au moins une chambre d'inversion (13), disposée en alignement au-dessus de l'au moins un premier échangeur de chaleur (10), pour dévier la partie gazeuse restante, contenant de faibles quantités de la partie liquide restante (SG5), pour entrer dans l'au moins un deuxième échangeur de chaleur (11) ayant une température de marche T2 < T1, pour condenser au moins une solution de la partie gazeuse dans une partie liquide (SG6) et pour collecter la partie liquide (SG6) dans l'au moins une chambre collectrice (11a) disposée en dessous de l'au moins un deuxième échangeur de chaleur (11), pour empêcher le reflux et pour éliminer (SG6) par l'au moins un dispositif de sortie (12), ainsi que
(iv3) au moins une sortie de gaz résiduaire (14), disposée à l'extrémité supérieure de l'au moins un cylindre séparateur de gaz (18), pour déverser les gaz résiduels non condensés (gaz résiduaires) ;
au moins un séparateur à gouttelettes (38) agissant comme un séparateur centrifuge,
au moins un condenseur de brouillard (27),
au moins un dispositif de transport (22),
au moins un cyclone (21),
au moins un condenseur vertical (32), monté en aval du cylindre séparateur de gaz (18), constitué de matériaux thermiquement, mécaniquement et chimiquement stables et stables vis-à-vis de la corrosion, ayant une section transversale circulaire, pour fabriquer un brouillard purifié (36a), le condenseur (32) comprenant les composants suivants :
au moins une chambre de répartition (32a), disposée à l'extrémité intérieure de l'au moins un condenseur vertical (32) ayant une section transversale circulaire, contenant un mélange de substances (SG3 ; SG4) de parties gazeuses et de parties solides à une faible concentration dans au moins une partie liquide,
au moins un dispositif pour doser au moins un produit dans l'au moins une chambre de répartition (32a) pour lier les parties gazeuses restantes du mélange de substances (SG3 ; SG4) et pour former un mélange de substances (SG7) débarrassé des parties gazeuses,
au moins un échangeur de chaleur à faisceau tubulaire (35), comportant des tubes échangeurs de chaleur (35a) disposés concentriquement, pour chauffer le mélange de substances (SG7) s'écoulant verticalement vers le haut, l'échangeur de chaleur à faisceau tubulaire (35) pouvant être exploité avec un brouillard chaud (36a), renvoyés par l'intermédiaire d'au moins un tube central de brouillard (36),
au moins un récipient extérieur (24), entourant d'une manière concentrique l'au moins un échangeur de chaleur à faisceau tubulaire (35), ayant au moins une chambre d'évaporation (25) et au moins une chambre collectrice (19),
au moins une sortie (28) pour le brouillard,
au moins un tube à brouillard (29), entourant concentriquement l'au moins un tube central de brouillard (36), pour évacuer le brouillard (36a) du condenseur (32) par l'au moins une sortie de brouillard (28), pour utilisation comme source de chaleur,
des orifices de sortie (35b) à l'extrémité supérieure de l'au moins un échangeur de chaleur à faisceau tubulaire (35) pour évacuer le mélange de substances liquides chauffé (SG7) dans l'au moins une chambre d'évaporation (25) de l'au moins un récipient extérieur (24) entourant concentriquement l'au moins un échangeur de chaleur à faisceau tubulaire (35), pour séparer le brouillard (36a) et collecter le mélange de substances liquides résultant (SG8) dans l'au moins une chambre collectrice (19),
au moins une tôle de rebond de gouttes (34) disposée au-dessus des orifices de sortie (35b) et de l'au moins une chambre d'évaporation (25), sous forme d'une surface latérale, ouverte vers le bas, d'un tronc de cône plat,
au moins une bague de séparation inférieure (46) d'au moins un séparateur de gouttes (38) agissant comme un séparateur centrifuge et au moins une bague de séparation supérieure (47),
au moins une tubulure de sortie de brouillard (26), qui est disposée d'une manière annulaire autour de l'au moins un tube central de brouillard (36), pour évacuer le brouillard (36a) de l'au moins une chambre d'évaporation (25) dans l'au moins une bague de séparation inférieure (46) de l'au moins un séparateur de gouttes (38) agissant comme un séparateur centrifuge, qui comprend au moins une bague de séparation inférieure (46), comprenant en outre - de l'intérieur vers l'extérieur - au moins une chambre intérieure circonférentielle (46a), au moins une bague de tamisage circonférentielle (46b) disposée verticalement, pour recevoir les gouttes et les particules solides encore présentes, et pour permettre le passage du brouillard (36a) dans et à travers au moins une chambre extérieure circonférentielle (47c) et par au moins une bague de tamisage circonférentielle (47b) dans au moins une chambre intérieure (47a) de l'au moins une bague de séparation supérieure (47), la bague de séparation supérieure (47) comprenant en outre au moins une sortie de brouillard (47d) pour introduire au moins une partie du brouillard purifié (36a) dans (i) au moins un compresseur de brouillard (27) pour comprimer le brouillard purifié (36a) et pour comprimer et renvoyer le brouillard purifié (36a) dans l'au moins une face primaire propre de l'évaporateur (32), pour servir d'énergie d'entraînement, ou vers (ii) la face primaire propre d'au moins un autre évaporateur (32a), monté en cascade, de structure identique et/ou différente, ainsi que
au moins une sortie (23) pour le mélange de substances (SG8) à l'extrémité inférieure de l'au moins une chambre collectrice (19), qui est en liaison avec l'au moins un dispositif de refoulement (22) destiné à refouler le mélange de substances (SG8) dans l'au moins un cyclone (21) pour la séparation et l'évacuation de la partie liquide (engrais liquide) et de la partie solide (matière solide) ;
au moins un dispositif de refoulement (1) monté en amont du cylindre séparateur de gaz (18) pour refouler l'au moins un courant d'au moins un mélange de substances (SG1) à travers l'au moins un échangeur de chaleur d'entrée (3), pour chauffer l'au moins un courant (SG1) pour former le courant chaud (2) d'un mélange de substances (SG2) à l'aide d'au moins un condensat chaud (4) du brouillard (36a), l'au moins un échangeur de chaleur (3) comportant au moins une évacuation (5a) pour au moins un condensat refroidi (5) du brouillard (36a) et au moins une évacuation (effluent gazeux) pour les vapeurs du condensat (5) du brouillard (36a), et
au moins une conduite (17) pour transporter l'au moins un mélange de substances (SG3 ; SG4) purifié, se trouvant dans l'au moins un réservoir de stockage de liquide (18a) dans l'au moins une chambre de répartition (32a) disposée à l'extrémité inférieure de l'au moins un condenseur vertical (32) ayant une section transversale circulaire.

2. Dispositif de séparation SGTW selon la revendication 1, **caractérisé en ce que** l'au moins un condenseur (32) peut être exploité comme un évaporateur à circulation naturelle.

3. Dispositif de séparation SGTW selon la revendication 1 ou 2, **caractérisé en ce qu'**une tôle d'égouttage circonférentielle, obliquement ouverte vers le bas, est disposée contre l'arête circulaire supérieure de l'au moins un échangeur de chaleur à faisceau tubulaire (35).

4. Dispositif de séparation (SGTW) selon l'une des revendications 1 à 3, **caractérisé en ce que** l'au moins une tôle de rebond de gouttes (34), l'au moins une tôle d'égouttage et/ou la zone des orifices de sortie (35b) de l'au moins un échangeur de chaleur à faisceau tubulaire (35), a ou ont une surface superhydrophile et/ou superhydrophobe.

5. Dispositif de séparation (SGTW) selon l'une des revendications 1 à 4, **caractérisé en ce que** l'au moins un cyclone (9) et/ou l'au moins un cyclone (21) sont un hydrocyclone ou des hydrocyclones, et que l'au moins un dispositif de refoulement (1) est une pompe de refoulement et l'au moins un dispositif de refoulement (6) est un éjecteur.

6. Dispositif de séparation (SGTW) selon l'une des revendications 1 à 5, **caractérisé en ce que**, pour un montage en cascade de l'au moins un premier condenseur (32), il comprend, sur son au moins une face primaire, au moins une entrée de brouillard (28) pour amener le fluide chaud, à une température T3, et au moins une sortie de brouillard (26), comportant une conduite d'amenée pour le fluide chaud sortant et ayant une température T4, vers l'au moins une entrée de brouillard (28a) d'au moins un deuxième condenseur (32b), lequel, pour sa part, comprend au moins une sortie de brouillard (26a) avec une amenée pour le fluide chaud sortant à une température T5 vers l'au moins une entrée de brouillard (28n) d'au moins un n-ième condenseur (32n) ayant au moins une sortie de brouillard (26n) avec une amenée pour le fluide chaud sortant à une température Tn à au moins un échangeur de chaleur (45) d'un consommateur final de l'énergie (chaleur), l'au moins un échangeur de chaleur (45) comprenant au moins une sortie de condensat (44) allant vers une conduite collectrice (eau), la variable n étant un nombre entier ≥ 3 et T3 > T4 > T5 > Tn, les condenseurs (32), (32b) ... (32n) ayant tous la même structure.

7. Procédé de séparation pour la séparation continue ou discontinue de mélanges de substances (SG1) biogènes, semi-synthétiques et/ou synthétiques, en leurs parties solides, liquides et gazeuses, avec récupération de chaleur, à l'aide d'au moins un dispositif de séparation selon l'une des revendications 1 à 6, le dispositif de séparation comprenant les étapes de séparation suivantes :
(A) refoulement d'au moins un courant (2) d'au moins un mélange de substances (SG1) avec au moins un dispositif de refoulement (1) par au moins un échangeur de chaleur d'entrée (3), chauffage de l'au moins un courant (SG1) et formation d'un courant chaud d'un mélange de substances (SG2) par au moins un condensat chaud (4) d'un brouillard (36a), l'au moins un échangeur de chaleur d'entrée (3) comprenant au moins une sortie (5) pour l'au moins un condensat refroidi (5) et au moins une évacuation (effluent gazeux) pour les vapeurs du condensat (5) du brouillard (36a),
(B) refoulement de l'au moins un courant chaud (SG2 ; 2) provenant de l'au moins un échangeur de chaleur d'entrée (3) dans au moins un cyclone (3), en passant par au moins une conduite à l'aide d'au moins un dispositif de refoulement (9) entraîné par un fluide chaud (vapeur), et expansion de la partie liquide et gazeuse de l'au moins un courant chaud (SG2 ; 2) sous l'effet d'une modification ciblée de la tension superficielle à l'entrée et à l'intérieur d'au moins un cyclone (9) et production d'une différence de densité entre la partie liquide et gazeuse et la partie solide de l'au moins un mélange de substances chaud (SG2), de façon que la densité de la partie solide soit supérieure à la densité de la partie liquide et gazeuse,
(C) évacuation de la partie solide (matière solide) séparée dans l'au moins un cyclone (9), avec au moins un dispositif (7),
(D) refoulement de la partie (SG3) séparée, expansée, liquide et gazeuse, par au moins une conduite dans l'au moins un réservoir de stockage de liquide (18a) d'au moins un cylindre séparateur de gaz (18) ayant une section transversale circulaire, le dispositif de séparation dans l'au moins un cylindre séparateur de gaz (18) comprenant :
(d1) la condensation de la partie liquide (SG4), dans laquelle une faible quantité de la partie gazeuse est dissoute, dans au moins un premier échangeur de chaleur (10) disposé au-dessus de l'au moins un réservoir de stockage de liquide (18a) en alignement avec l'au moins un cylindre séparateur de gaz (18), à une température de marche T1, et renvoi de (SG4) dans le réservoir de stockage de liquide (18a),
(d2) déviation de l'au moins une solution ascendante résultante de la partie gazeuse dans la partie liquide (SG5) dans au moins une chambre d'inversion (13) disposée en alignement au-dessus de l'au moins un premier échangeur de chaleur (13), introduction de la partie gazeuse restante, avec de faibles quantités de la partie liquide restante (SG5), dans l'au moins un deuxième échangeur de chaleur (11) disposé en alignement à une température de marche T2 < T1 et collecte de l'au moins une solution concentrée résultante (SG6) de la partie gazeuse restante dans au moins une chambre collectrice (11a) disposée en dessous de l'au moins un deuxième échangeur de chaleur (11), pour empêcher le retour de (SG6) dans le premier échangeur de chaleur (10) et pour évacuer l'au moins une solution concentrée résultante (SG6) à l'aide d'au moins un dispositif d'évacuation (12), ainsi que
(d3) évacuation des gaz restants non condensés, à partir de l'au moins une sortie de gaz résiduaire (14) disposée à l'extrémité supérieure de l'au moins un cylindre séparateur de gaz (18),
(E) transport de l'au moins un mélange de substances (SG3 ; SG4) combiné, se trouvant dans l'au moins un réservoir de stockage de liquide (18a) par au moins une conduite (17) vers au moins une chambre de répartition (32a) disposée à l'extrémité inférieure de l'au moins un condenseur vertical (32) ayant une section transversale circulaire, le procédé de séparation comprenant en outre, dans l'au moins un condenseur (32) :
(e1) le dosage d'au moins un produit dans l'au moins une chambre de répartition (32a) pour liaison des parties gazeuses restantes du mélange de substances combiné (SG3 ; SG4) et formation d'un mélange de substances (SG7) débarrassé des parties gazeuses,
(e2) chauffage du mélange de substances (SG7) s'écoulant verticalement vers le haut dans au moins un échangeur de chaleur à faisceau tubulaire (35) ayant des tubes d'échange de chaleur (35a) disposés concentriquement, (35) étant exploité à l'aide de brouillard chaud (36a) renvoyé par au moins un tube central de brouillard (36),
(e3) chauffage de l'au moins un mélange de substances (SG1) avec le brouillard (36a), qui est évacué du condenseur (32) par au moins une sortie de brouillard (28), par l'intermédiaire de l'au moins un tube de brouillard (29) entourant concentriquement l'au moins un tube central de brouillard (36), et qui est transporté vers le côté primaire de l'au moins un échangeur de chaleur d'entrée (3),
(e4) évacuation du mélange de substances liquides chauffé (SG7) des orifices de sortie (35b) à l'extrémité supérieure de l'au moins un échangeur de chaleur à faisceau tubulaire (35) pour pénétrer dans l'au moins une chambre d'évaporation (25) d'au moins un récipient extérieur (24) entourant concentriquement l'au moins un échangeur de chaleur à faisceau tubulaire (35) et séparation du brouillard (36a) et collecte du mélange de substances liquides résultant (SG8) dans l'au moins une chambre collectrice (19),
(e5) collecte des mousses et des gouttes jaillissantes, à l'aide d'au moins une tôle de rebond de gouttes (34), disposée au-dessus des orifices de sortie (35b) et de l'au moins une chambre d'évaporation (25), sous forme d'une surface latérale, ouverte vers le bas, d'un tronc de cône plat,
(e6) évacuation du brouillard (36a) de l'au moins une chambre d'évaporation (25) dans l'au moins une bague de séparation inférieure (46) d'au moins un séparateur de gouttes (38) agissant comme un séparateur centrifuge, par l'intermédiaire d'au moins une tubulure de sortie de brouillard (26), qui est disposée de façon annulaire autour de l'au moins un tube de brouillard (36b), le brouillard (36a) pénétrant dans l'au moins une bague de séparation inférieure (46) - de l'intérieur vers l'extérieur - dans l'au moins une chambre intérieure circonférentielle (46a), par l'au moins une bague de tamisage circonférentielle disposée verticalement (46b) pour recueillir les gouttes et les particules solides encore présentes et dans l'au moins une chambre extérieure circonférentielle (47c), et traversant cette dernière et, par au moins une bague de tamisage circonférentielle (47b), pénétrant dans l'au moins une chambre intérieure circonférentielle (47a) de l'au moins une bague de séparation supérieure (47), où le brouillard purifié (36a) est envoyé, par au moins une sortie de brouillard (47d), au moins partiellement (i) vers au moins un compresseur de brouillard (27) pour comprimer le brouillard purifié (36a) et pour comprimer et renvoyer le brouillard purifié (36a) dans l'au moins un côté primaire propre du condenseur (32) en tant qu'énergie d'entraînement ou (ii) vers la face primaire propre d'au moins un autre condenseur (32a) monté en cascade, de structure identique ou différente, ainsi que
(e7) évacuation du mélange de substances (SG8) par au moins une sortie (23) à l'extrémité inférieure de l'au moins une chambre collectrice (19) et refoulement de (SG8) à l'aide d'au moins un dispositif de refoulement (22) dans au moins un cyclone (21) et séparation et évacuation de la partie liquide séparée (engrais liquide) et de la partie solide séparée (matière solide).

8. Procédé de séparation selon la revendication 7, **caractérisé en ce que** l'au moins un condenseur (32) est exploité comme un évaporateur à circulation naturelle.

9. Procédé de séparation selon l'une des revendications 7 et 8, **caractérisé en ce que** le fluide chaud a la composition en matières du brouillard (36a).

10. Procédé de séparation selon l'une des revendications 7 à 9, **caractérisé en ce que** les mélanges de substances biogènes, semi-synthétiques et/ou synthétiques (SG1 ; SG2 ; SG3 ; SG4 ; SG5 ; SG6 ; SG7 ; SG8) et leurs constituants solides, liquides et gazeux, sont choisis dans le groupe consistant en :
- les déchets, choisis dans le groupe consistant en le lisier, le purin, les matières fécales, les résidus de fermentation, les ferments, les boues d'épuration, l'eau provenant des bassins de clarification finale, les concentrés des étages de purification biologique et les résidus des laveurs chimiques, des réacteurs microbiologiques, des installations de génie génétique, de filtres et d'électrofiltres, et les résidus du traitement de l'air d'évacuation et des installations de climatisation,
- les suspensions et cultures de microorganismes et cellules, ainsi que les suspensions de champignons, plantes, résidus végétaux, animaux morts et restes d'animaux broyés,
- les biopolymères natifs, choisis dans le groupe consistant en les protéines et les peptides, les acides nucléiques, les alpha-polysaccharides, les bêta-polysaccharides, les lipides, les polyhydroxyalcanoates, la cutine, la subérine, les polylactides, les polyhydroxybutyrates, les amidons thermoplastiques, les thermoplastiques à base de lignine et les époxyacrylates à base d'huiles naturelles,
- les cires choisies dans le groupe consistant en la cire de candelilla, la cire de carnauba, la cire du Japon, la cire de sparte, la cire de liège, la cire de guarana, la cire d'huile de germe de riz, la cire de canne à sucre, la cire d'ouricuri, la cire de lignite, les cires de fleurs absolues, la cire de palmier de Cuba, la cire de coton, la cire de lin, la cire de tourbe, la cire de rose, la cire de jasmin, la cire de peetha, la cire de myrte, la cire de figues cérifères, le spermaceti, la cire de laine, le shellac, la cire de Chine, la cire d'abeille, la cire de glande uropygienne, la cérésine, l'ozocérite, les cires dures, les cires d'esters montaniques, les cires de sasol, les cires de jojoba hydrogénées, les alcools de cire de laine (eucérite) et les cires d'abeille modifiées (Cerabellina),
- les fluides corporels, choisis dans le groupe consistant en le sang, la lymphe, la salive, le suc gastrique, les sécrétions pancréatiques, la bile, l'urine, la sueur, le lait maternel, les sécrétions vaginales, le liquide lacrymal, les sécrétions nasales, les éjaculats, le liquide menstruel, les tensioactifs, l'eau de l'œil, l'eau cérébrale, le fluide ascitique, le liquide pleural, le liquide péricardique, le liquide articulaire, le liquide amniotique et le cérumen,
- les mélanges solide-liquide-gaz de sources pétrolières, de sources de gaz naturel, de mines, de houillères et de réacteurs chimiques,
- les solides inorganiques et organiques, à faible masse moléculaire, oligomères et à grande masse moléculaire,
- les solvants inorganiques et organiques,
- les gaz inorganiques et organiques et
- les produits alimentaires, les boissons et les précurseurs d'aliments,
en particulier **en ce que** le mélange de substances (SG1) est choisi dans le groupe consistant en le lisier, le purin et les résidus de fermentation, qui contiennent
- en tant que constituants solides des parties de plantes, des protéines et peptides, des acides nucléiques, des alpha-polysaccharides, des bêta-polysaccharides, des lipides, des ferments, des enzymes, des microorganismes, des sucres, des alcools de sucre, des acides sacchariques et des sels, tels que le nitrate de potassium, le nitrite de sodium, l'hydrogénophosphate de calcium et le sulfate de magnésium, en solution ou dispersion,
- en tant que constituants liquides, de l'eau et des amines organiques non volatils, et
- en tant que gaz, de l'ammoniac et des amines organiques volatiles, primaires, secondaires et tertiaires
en particulier **en ce que**
- la température T1 = 30 °C à 60 °C,
- la température T2 = 10 °C à 40 °C,
- la température T3 = 90 °C à 110 °C, et
- la température T4 = 80 °C à 100 °C
- la température T5 = 70 °C à 90 °C
et **en ce que** les différences T3 - T4 et T4 - T5 sont chacune de 5 °C à 15 °C, et la différence T5 - Tn = (n x 5) °C à (n x 15) °C.

11. Procédé de séparation selon l'une des revendications 7 à 10, **caractérisé en ce que** le mélange de substances (SG2) est, dans l'étape de séparation (B), expansé par action mécanique, turbulence et/ou par action sonore, en particulier **en ce qu'**on ajoute à un mélange de substances (SG2) fortement moussant, pour modifier la tension superficielle, au moins un agent antimoussant pour supprimer une formation de mousse trop intense, et à un mélange de substances (SG2) ne moussant que faiblement, pour modifier la tension superficielle, au moins un tensioactif, pour intensifier la formation de mousse, en particulier **en ce qu'**on ajoute à la partie (SG3) séparée, expansée, liquide et gazeuse, pour une meilleure mise en œuvre dans l'étape de séparation (D), au moins un antimoussant pour augmenter la tension superficielle.

12. Procédé de séparation selon l'une des revendications 10 à 11, **caractérisé en ce qu'**on lie à l'aide d'acides sulfuriques et/ou d'acides orthophosphoriques le mélange de substances combiné (SG3 ; SG4) dans l'au moins une chambre de répartition (32a), l'ammoniac résiduel et les amines organiques résiduelles.

13. Procédé de séparation selon l'une des revendications 7 à 12, **caractérisé en ce que** les parties solides (matière solide) séparées dans les étapes de séparation (D) et (E) sont mises en œuvre dans un broyeur par voie mécanochimique pour donner du carbone élémentaire, et/ou on ajoute aux mélanges de substances (SG1 ; SG2 ; SG3 ; SG4 ; SG5 ; SG6 ; SG7 ; SG8) biogènes, semi-synthétiques et/ou synthétiques, et/ou à leurs constituants solides et liquides, des matières solides pour augmenter l'aire et/ou pour une décontamination, en particulier **en ce que** les matières solides sont choisies dans le groupe consistant en les charbons actifs, les bio-charbons, les nanotubes de carbone, les nanofibres de carbone, les fibres naturelles, semi-synthétiques et synthétiques, la microcellulose, la nanocellulose, les fibres creuses, les aérogels, les phyllosilicates, les silicates, les sables et les matériaux mésopores.

14. Utilisation du dispositif de séparation selon l'une des revendications 1 à 6 et du procédé de séparation selon l'une des revendications 7 à 13 en agriculture, en sylviculture et en horticulture, pour séparer les mélanges azéotropes, pour obtenir de l'eau potable et dessaler l'eau potable, pour fabriquer de l'eau ultrapure, pour dessaler l'eau de mer, pour éliminer le plâtre des eaux souterraines, pour séparer les sulfates, pour traiter les eaux saumâtres, pour décontaminer l'eau contenant des huiles, des métaux lourds et des polluants organiques persistants, pour décontaminer les mélanges de substances avec du charbon actif en circuit fermé, pour séparer, fractionner et récupérer des composés et vapeurs volatils organiques, en tant qu'alternative à la distillation et à la rectification, pour séparer des oxydes et des hydroxydes colloïdaux, des minéraux, des charbons, des microparticules, des microorganismes, les substances de turbidité, les sédiments et les sables, pour récupérer les métaux, pour séparer les émulsions huile dans l'eau, pour déshydrater les latex, pour produire du chlore, pour récolter des cellules en biotechnologie, pour séparer les protéines, les enzymes et les antibiotiques en biotechnologie, pour produire des antibiotiques, pour sécher et former des nanosphères, des microsphères et des micelles, en tant que remplacement d'une microfiltration, d'une ultrafiltration, d'une nanofiltration et d'une osmose inverse et pour se combiner à ces techniques, en tant qu'alternative à des bassins de sédimentation ou en combinaison avec ceux-ci, pour concentrer des processus industriels, pour soutenir le modèle de diffusion en solution ou le modèle hydrodynamique de séparation sur membrane, ou se combiner à ces techniques, pour remplacer et soutenir la pervaporation, en tant que remplacement et alternative à des dialyses en général, en médecine humaine et médecine vétérinaire, dans les poumons artificiels et pour l'épuration du sang, pour épaissir les jus, pour sécher le lait, pour raffiner le sucre, pour purifier les précurseurs de bière et les produits de brasserie, pour séparer les graisses et les protéines lors de la production d'additifs alimentaires, pour fabriquer des dispersions, des émulsions qui retardent la maturation d'Ostwald ou l'empêchent, pour fabriquer un brouillard condensé ayant la qualité de l'eau distillée pour désinfecter et purifier les étables et pour retransformer l'ammoniac provenant des eaux de lavage des installations de lavage d'ammoniac.
